# EUROPEAN PATENT APPLICATION

(11) **EP 4 694 275 A1**
(43) Date of publication of application: **11.02.2026**
(21) Application number: 23931317.4
(22) Date of filing: 04.04.2023
(51) Int. Cl.: H04W 24/00, H04W 16/22, H04L 41/16

(54) **COMMUNICATION METHODS AND APPARATUS AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2023/086335
(87) International publication number: WO 2024/207245

(57) **Abstract**

The present disclosure relates to communication methods and apparatus and a storage medium. A communication method is executed by a first device, and the method comprises: sending indication information, the indication information being used for indicating an artificial intelligence (AI) function, and the AI function being used for beam prediction. A communication method is executed by a second device, and the method comprises: receiving indication information, the indication information being used for indicating an artificial intelligence (AI) function, and the AI function being used for beam prediction. The present disclosure uses indication information to indicate AI functions, thus achieving indication of AI functions.

## Description

### FIELD

The present disclosure relates to the field of communication technologies, and in particular, to a communication method, an apparatus, and a storage medium.

### BACKGROUND

In recent years, artificial intelligence (AI) technology has made continuous breakthroughs in multiple fields. AI technology is gradually intersecting and penetrating other disciplinary fields, providing new directions and methods for the development of different disciplines.

Within the 3rd Generation Partnership Project (3GPP), a research project on AI technology in wireless air interfaces has been established. This project aims to study the introduction of AI technology into wireless air interfaces and explore how AI technology can assist and improve wireless air interface transmission technologies. For example, performing beam prediction based on AI models to reduce the number of beam pairs that a terminal needs to measure.

### SUMMARY

To overcome the problems in the related art, the present disclosure provides a communication method, an apparatus, and storage medium.

According to a first aspect of the embodiments of the present disclosure, a communication method is provided, performed by a first device, including:
sending indication information, where the indication information is used to indicate an artificial intelligence (AI) functionality, and the AI functionality is used for beam prediction.

In an embodiment, the indication information includes the AI functionality.

In an embodiment, different AI functionalities correspond to different parameter information.

In an embodiment, the indication information includes parameter information.

In an embodiment, the parameter information includes at least one of:
an application instance corresponding to the AI functionality;
a set relationship between a first set and a second set corresponding to the AI functionality, where the first set and the second set include a transmission beam of a network device and/or a reception beam of a terminal device;
beam information of a first set and/or a second set corresponding to the AI functionality, where the first set and the second set include a transmission beam of a network device and/or a reception beam of a terminal device;
time information of a first set and/or a second set corresponding to the AI functionality, where the first set and the second set include a transmission beam of a network device and/or a reception beam of a terminal device, and the AI functionality is used for time-domain beam prediction;
network device coverage parameter information;
terminal distribution information; or
terminal mobility information.

In an embodiment, the set relationship includes at least one of:
the first set being a subset of the second set;
the first set being different from the second set; or
the first set being identical to the second set.

In an embodiment, the beam information includes at least one of:
a quantity of beams included in the first set corresponding to the AI functionality, or a quantity range within which a quantity of beams included in the first set corresponding to the AI functionality falls;
positions of beams included in the first set corresponding to the AI functionality within beams included in the second set, where the first set is a subset of the second set;
a quantity of beams included in the second set corresponding to the AI functionality, or a quantity range within which a quantity of beams included in the second set corresponding to the AI functionality falls;
a ratio of a quantity of beams corresponding to the first set to a quantity of beams corresponding to the second set; or
a mapping relationship between beams included in the first set and beams included in the second set, where the first set is different from the second set.

In an embodiment, the time information includes at least one of:
a quantity of time instances corresponding to the first set, or a quantity range within which a quantity of time instances corresponding to the first set falls;
a quantity of time instances corresponding to the second set, or a quantity range within which a quantity of time instances corresponding to the second set falls; or
a time pattern of time corresponding to the first set and time corresponding to the second set.

In an embodiment, the network device coverage parameter information includes at least one of:
a spacing between network devices; or
a deployment type, where the deployment type includes at least one of: urban macro, urban micro, indoor hotspot, dense urban, or rural.

In an embodiment, the terminal distribution information includes a ratio of a quantity of outdoor terminals to a quantity of indoor terminals.

In an embodiment, the terminal mobility information includes at least one of:
a terminal movement speed;
a terminal movement acceleration;
a terminal movement direction; or
a terminal movement trajectory.

In an embodiment, different set relationships correspond to different AI functionalities.

In an embodiment, where the first set is a subset of the second set, the correspondence between the parameter information and the AI functionality includes at least one of:
first sets with different quantities of beams correspond to different AI functionalities; or
first sets whose quantities of beams fall within different quantity ranges correspond to different AI functionalities; or
first sets with different quantities of beams correspond to the same AI functionality; or
first sets whose quantities of beams fall within different quantity ranges correspond to the same AI functionality; or
first sets, where beam compositions thereof correspond to different beam positions in the second set, correspond to different AI functionalities, where each of the first sets has a respective beam composition; or
first sets, where beam compositions thereof correspond to different beam positions in the second set, correspond to the same AI functionality, where each of the first sets has a respective beam composition; or
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, where the first set is different from the second set, the correspondence between the parameter information and the AI functionality includes at least one of:
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, different quantities of time instances correspond to different AI functionalities.

In an embodiment, different time patterns correspond to different AI functionalities.

In an embodiment,
different deployment types correspond to different AI functionalities, or different deployment types correspond to the same AI functionality;
different spacings between network devices correspond to different AI functionalities, or different spacings between network devices correspond to the same AI functionality.

In an embodiment, different terminal distribution information corresponds to different AI functionalities, or different terminal distribution information corresponds to the same AI functionality.

In an embodiment, different terminal mobility information corresponds to different AI functionalities, or different terminal mobility information corresponds to the same AI functionality.

In an embodiment, the first set is a beam set corresponding to an input value of an AI model, and the second set is a beam set corresponding to an output of the model.

In an embodiment, the first device is a terminal.

In an embodiment, the first device is a radio access network device or a core network device.

In an embodiment, the parameter information corresponding to the AI functionality is predefined by a protocol, or configured by configuration information, or indicated based on indication information.

In an embodiment, in response to the first device being a radio access network device or a core network device, or the parameter information corresponding to the AI functionality being predefined by a protocol, the indication information indicates at least two AI functionalities, and the at least two functionalities are different AI functionalities;
in response to the first device being a terminal, the indication information indicates at least one AI functionality.

In an embodiment, the AI functionality is a capability that the terminal must support, or the AI functionality is a capability that the terminal optionally supports.

In an embodiment, the AI functionality includes a first AI functionality and a second AI functionality;
the first AI functionality is a prerequisite requirement for the second functionality.

According to a second aspect of the embodiments of the present disclosure, a communication method is provided, performed by a second device, including:
receiving indication information, where the indication information is used to indicate an artificial intelligence (AI) functionality, and the AI functionality is used for beam prediction.

In an embodiment, the indication information includes the AI functionality.

In an embodiment, different AI functionalities correspond to different parameter information.

In an embodiment, the indication information includes parameter information.

In an embodiment, the parameter information includes at least one of:
an application instance corresponding to the AI functionality;
a set relationship between a first set and a second set corresponding to the AI functionality, where the first set and the second set include a transmission beam of a network device and/or a reception beam of a terminal device;
beam information of a first set and/or a second set corresponding to the AI functionality, where the first set and the second set include a transmission beam of a network device and/or a reception beam of a terminal device;
time information of a first set and/or a second set corresponding to the AI functionality, where the first set and the second set include a transmission beam of a network device and/or a reception beam of a terminal device, and the AI functionality is used for time-domain beam prediction;
network device coverage parameter information;
terminal distribution information; or
terminal mobility information.

In an embodiment, the application instance includes at least one of:
spatial beam prediction;
time-domain beam prediction; or
spatial beam prediction and time-domain beam prediction.

In an embodiment, the set relationship includes at least one of:
the first set being a subset of the second set;
the first set being different from the second set; or
the first set being identical to the second set.

In an embodiment, the beam information includes at least one of:
a quantity of beams included in the first set corresponding to the AI functionality, or a quantity range within which a quantity of beams included in the first set corresponding to the AI functionality falls;
positions of beams included in the first set corresponding to the AI functionality within beams included in the second set, where the first set is a subset of the second set;
a quantity of beams included in the second set corresponding to the AI functionality, or a quantity range within which a quantity of beams included in the second set corresponding to the AI functionality falls;
a ratio of a quantity of beams corresponding to the first set to a quantity of beams corresponding to the second set; or
a mapping relationship between beams included in the first set and beams included in the second set, where the first set is different from the second set.

In an embodiment, the time information includes at least one of:
a quantity of time instances corresponding to the first set, or a quantity range within which a quantity of time instances corresponding to the first set falls;
a quantity of time instances corresponding to the second set, or a quantity range within which a quantity of time instances corresponding to the second set falls; or
a time pattern of time corresponding to the first set and time corresponding to the second set.

In an embodiment, the network device coverage parameter information includes at least one of:
a spacing between network devices; or
a deployment type, where the deployment type includes at least one of: urban macro, urban micro, indoor hotspot, dense urban, or rural.

In an embodiment, the terminal distribution information includes a ratio of a quantity of outdoor terminals to a quantity of indoor terminals.

In an embodiment, the terminal mobility information includes at least one of:
a terminal movement speed;
a terminal movement acceleration;
a terminal movement direction; or
a terminal movement trajectory.

In an embodiment, different set relationships correspond to different AI functionalities.

In an embodiment, where the first set is a subset of the second set, the correspondence between the parameter information and the AI functionality includes at least one of:
first sets with different quantities of beams correspond to different AI functionalities; or
first sets whose quantities of beams fall within different quantity ranges correspond to different AI functionalities; or
first sets with different quantities of beams correspond to the same AI functionality; or
first sets whose quantities of beams fall within different quantity ranges correspond to the same AI functionality; or
first sets, where beam compositions thereof correspond to different beam positions in the second set, correspond to different AI functionalities, where each of the first sets has a respective beam composition; or
first sets, where beam compositions thereof correspond to different beam positions in the second set, correspond to the same AI functionality, where each of the first sets has a respective beam composition; or
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, where the first set is different from the second set, the correspondence between the parameter information and the AI functionality includes at least one of:
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, different quantities of time instances correspond to different AI functionalities.

In an embodiment, different time patterns correspond to different AI functionalities.

In an embodiment,
different deployment types correspond to different AI functionalities, or different deployment types correspond to the same AI functionality;
different spacings between network devices correspond to different AI functionalities, or different spacings between network devices correspond to the same AI functionality.

In an embodiment, different terminal distribution information corresponds to different AI functionalities, or different terminal distribution information corresponds to the same AI functionality.

In an embodiment, different terminal mobility information corresponds to different AI functionalities, or different terminal mobility information corresponds to the same AI functionality.

In an embodiment, the first set is a beam set corresponding to an input value of an AI model, and the second set is a beam set corresponding to an output of the model.

In an embodiment, the first device is a terminal.

In an embodiment, the first device is a radio access network device or a core network device.

In an embodiment, the parameter information corresponding to the AI functionality is predefined by a protocol, or configured by configuration information, or indicated based on indication information.

In an embodiment, in response to the first device being a radio access network device or a core network device, or the parameter information corresponding to the AI functionality being predefined by a protocol, the indication information indicates at least two AI functionalities, and the at least two functionalities are different AI functionalities;
in response to the first device being a terminal, the indication information indicates at least one AI functionality.

In an embodiment, the AI functionality is a capability that the terminal must support, or the AI functionality is a capability that the terminal optionally supports.

In an embodiment, the AI functionality includes a first AI functionality and a second AI functionality;
the first AI functionality is a prerequisite requirement for the second functionality.

According to a third aspect of the embodiments of the present disclosure, a communication apparatus is provided, including:
a sending unit, configured to send indication information, where the indication information is used to indicate an artificial intelligence (AI) functionality, and the AI functionality is used for beam prediction.

In an embodiment, the indication information includes the AI functionality.

In an embodiment, different AI functionalities correspond to different parameter information.

In an embodiment, the indication information includes parameter information.

In an embodiment, the parameter information includes at least one of:
an application instance corresponding to the AI functionality;
a set relationship between a first set and a second set corresponding to the AI functionality, where the first set and the second set include a transmission beam of a network device and/or a reception beam of a terminal device;
beam information of a first set and/or a second set corresponding to the AI functionality, where the first set and the second set include a transmission beam of a network device and/or a reception beam of a terminal device;
time information of a first set and/or a second set corresponding to the AI functionality, where the first set and the second set include a transmission beam of a network device and/or a reception beam of a terminal device, and the AI functionality is used for time-domain beam prediction;
network device coverage parameter information;
terminal distribution information; or
terminal mobility information.

In an embodiment, the set relationship includes at least one of:
the first set being a subset of the second set;
the first set being different from the second set; or
the first set being identical to the second set.

In an embodiment, the beam information includes at least one of:
a quantity of beams included in the first set corresponding to the AI functionality, or a quantity range within which a quantity of beams included in the first set corresponding to the AI functionality falls;
positions of beams included in the first set corresponding to the AI functionality within beams included in the second set, where the first set is a subset of the second set;
a quantity of beams included in the second set corresponding to the AI functionality, or a quantity range within which a quantity of beams included in the second set corresponding to the AI functionality falls;
a ratio of a quantity of beams corresponding to the first set to a quantity of beams corresponding to the second set; or
a mapping relationship between beams included in the first set and beams included in the second set, where the first set is different from the second set.

In an embodiment, the time information includes at least one of:
a quantity of time instances corresponding to the first set, or a quantity range within which a quantity of time instances corresponding to the first set falls;
a quantity of time instances corresponding to the second set, or a quantity range within which a quantity of time instances corresponding to the second set falls; or
a time pattern of time corresponding to the first set and time corresponding to the second set.

In an embodiment, the network device coverage parameter information includes at least one of:
a spacing between network devices; or
a deployment type, where the deployment type includes at least one of: urban macro, urban micro, indoor hotspot, dense urban, or rural.

In an embodiment, the terminal distribution information includes a ratio of a quantity of outdoor terminals to a quantity of indoor terminals.

In an embodiment, the terminal mobility information includes at least one of:
a terminal movement speed;
a terminal movement acceleration;
a terminal movement direction; or
a terminal movement trajectory.

In an embodiment, different set relationships correspond to different AI functionalities.

In an embodiment, where the first set is a subset of the second set, the correspondence between the parameter information and the AI functionality includes at least one of:
first sets with different quantities of beams correspond to different AI functionalities; or
first sets whose quantities of beams fall within different quantity ranges correspond to different AI functionalities; or
first sets with different quantities of beams correspond to the same AI functionality; or
first sets whose quantities of beams fall within different quantity ranges correspond to the same AI functionality; or
first sets, where beam compositions thereof correspond to different beam positions in the second set, correspond to different AI functionalities, where each of the first sets has a respective beam composition; or
first sets, where beam compositions thereof correspond to different beam positions in the second set, correspond to the same AI functionality, where each of the first sets has a respective beam composition; or
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, where the first set is different from the second set, the correspondence between the parameter information and the AI functionality includes at least one of:
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, different quantities of time instances correspond to different AI functionalities.

In an embodiment, different time patterns correspond to different AI functionalities.

In an embodiment,
different deployment types correspond to different AI functionalities, or different deployment types correspond to the same AI functionality;
different spacings between network devices correspond to different AI functionalities, or different spacings between network devices correspond to the same AI functionality.

In an embodiment, different terminal distribution information corresponds to different AI functionalities, or different terminal distribution information corresponds to the same AI functionality.

In an embodiment, different terminal mobility information corresponds to different AI functionalities, or different terminal mobility information corresponds to the same AI functionality.

In an embodiment, the first set is a beam set corresponding to an input value of an AI model, and the second set is a beam set corresponding to an output of the model.

In an embodiment, the first device is a terminal.

In an embodiment, the first device is a radio access network device or a core network device.

In an embodiment, the parameter information corresponding to the AI functionality is predefined by a protocol, or configured by configuration information, or indicated based on indication information.

In an embodiment, in response to the first device being a radio access network device or a core network device, or the parameter information corresponding to the AI functionality being predefined by a protocol, the indication information indicates at least two AI functionalities, and the at least two functionalities are different AI functionalities;
in response to the first device being a terminal, the indication information indicates at least one AI functionality.

In an embodiment, the AI functionality is a capability that the terminal must support, or the AI functionality is a capability that the terminal optionally supports.

In an embodiment, the AI functionality includes a first AI functionality and a second AI functionality;
the first AI functionality is a prerequisite requirement for the second functionality.

According to a fourth aspect of the embodiments of the present disclosure, a communication apparatus is provided, including:
a receiving unit, configured to receive indication information, where the indication information is used to indicate an artificial intelligence (AI) functionality, and the AI functionality is used for beam prediction.

In an embodiment, the indication information includes the AI functionality.

In an embodiment, different AI functionalities correspond to different parameter information.

In an embodiment, the indication information includes parameter information.

In an embodiment, the parameter information includes at least one of:
an application instance corresponding to the AI functionality;
a set relationship between a first set and a second set corresponding to the AI functionality, where the first set and the second set include a transmission beam of a network device and/or a reception beam of a terminal device;
beam information of a first set and/or a second set corresponding to the AI functionality, where the first set and the second set include a transmission beam of a network device and/or a reception beam of a terminal device;
time information of a first set and/or a second set corresponding to the AI functionality, where the first set and the second set include a transmission beam of a network device and/or a reception beam of a terminal device, and the AI functionality is used for time-domain beam prediction;
network device coverage parameter information;
terminal distribution information; or
terminal mobility information.

In an embodiment, the set relationship includes at least one of:
the first set being a subset of the second set;
the first set being different from the second set; or
the first set being identical to the second set.

In an embodiment, the beam information includes at least one of:
a quantity of beams included in the first set corresponding to the AI functionality, or a quantity range within which a quantity of beams included in the first set corresponding to the AI functionality falls;
positions of beams included in the first set corresponding to the AI functionality within beams included in the second set, where the first set is a subset of the second set;
a quantity of beams included in the second set corresponding to the AI functionality, or a quantity range within which a quantity of beams included in the second set corresponding to the AI functionality falls;
a ratio of a quantity of beams corresponding to the first set to a quantity of beams corresponding to the second set; or
a mapping relationship between beams included in the first set and beams included in the second set, where the first set is different from the second set.

In an embodiment, the time information includes at least one of:
a quantity of time instances corresponding to the first set, or a quantity range within which a quantity of time instances corresponding to the first set falls;
a quantity of time instances corresponding to the second set, or a quantity range within which a quantity of time instances corresponding to the second set falls; or
a time pattern of time corresponding to the first set and time corresponding to the second set.

In an embodiment, the network device coverage parameter information includes at least one of:
a spacing between network devices; or
a deployment type, where the deployment type includes at least one of: urban macro, urban micro, indoor hotspot, dense urban, or rural.

In an embodiment, the terminal distribution information includes a ratio of a quantity of outdoor terminals to a quantity of indoor terminals.

In an embodiment, the terminal mobility information includes at least one of:
a terminal movement speed;
a terminal movement acceleration;
a terminal movement direction; or
a terminal movement trajectory.

In an embodiment, different set relationships correspond to different AI functionalities.

In an embodiment, where the first set is a subset of the second set, the correspondence between the parameter information and the AI functionality includes at least one of:
first sets with different quantities of beams correspond to different AI functionalities; or
first sets whose quantities of beams fall within different quantity ranges correspond to different AI functionalities; or
first sets with different quantities of beams correspond to the same AI functionality; or
first sets whose quantities of beams fall within different quantity ranges correspond to the same AI functionality; or
first sets, where beam compositions thereof correspond to different beam positions in the second set, correspond to different AI functionalities, where each of the first sets has a respective beam composition; or
first sets, where beam compositions thereof correspond to different beam positions in the second set, correspond to the same AI functionality, where each of the first sets has a respective beam composition; or
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, where the first set is different from the second set, the correspondence between the parameter information and the AI functionality includes at least one of:
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, different quantities of time instances correspond to different AI functionalities.

In an embodiment, different time patterns correspond to different AI functionalities.

In an embodiment,
different deployment types correspond to different AI functionalities, or different deployment types correspond to the same AI functionality;
different spacings between network devices correspond to different AI functionalities, or different spacings between network devices correspond to the same AI functionality.

In an embodiment, different terminal distribution information corresponds to different AI functionalities, or different terminal distribution information corresponds to the same AI functionality.

In an embodiment, different terminal mobility information corresponds to different AI functionalities, or different terminal mobility information corresponds to the same AI functionality.

In an embodiment, the first set is a beam set corresponding to an input value of an AI model, and the second set is a beam set corresponding to an output of the model.

In an embodiment, the first device is a terminal.

In an embodiment, the first device is a radio access network device or a core network device.

In an embodiment, the parameter information corresponding to the AI functionality is predefined by a protocol, or configured by configuration information, or indicated based on indication information.

In an embodiment, in response to the first device being a radio access network device or a core network device, or the parameter information corresponding to the AI functionality being predefined by a protocol, the indication information indicates at least two AI functionalities, and the at least two functionalities are different AI functionalities;
in response to the first device being a terminal, the indication information indicates at least one AI functionality.

In an embodiment, the AI functionality is a capability that the terminal must support, or the AI functionality is a capability that the terminal optionally supports.

In an embodiment, the AI functionality includes a first AI functionality and a second AI functionality;
the first AI functionality is a prerequisite requirement for the second functionality.

According to a fifth aspect of the embodiments of the present disclosure, a communication apparatus is provided, including:
a processor; and
a memory for storing processor-executable instructions;
where the processor is configured to: perform the method according to the first aspect or any implementation of the first aspect.

According to a sixth aspect of the embodiments of the present disclosure, a communication apparatus is provided, including:
a processor; and
a memory for storing processor-executable instructions;
where the processor is configured to: perform the method according to the second aspect or any implementation of the second aspect.

According to a seventh aspect of the embodiments of the present disclosure, a storage medium is provided, where the storage medium has stored therein instructions that, when executed by a processor of a first device, cause the first device to perform the method according to the first aspect or any implementation of the first aspect.

According to an eighth aspect of the embodiments of the present disclosure, a storage medium is provided, where the storage medium has stored therein instructions that, when executed by a processor of a second device, cause the second device to perform the method according to the second aspect or any implementation of the second aspect.

The technical solutions provided by the embodiments of the present disclosure may include the following beneficial effects: the first device sends indication information to indicate an AI functionality used for beam prediction, and the second device receives the indication information, thereby enabling the first device and the second device to clarify the managed AI functionality, thus reducing the transmission of signaling and signals related to AI functionality management.

It should be understood that the above general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram of a communication system according to an embodiment.
FIG. 2 is a flowchart of a communication method according to an embodiment.
FIG. 3A to FIG. 3B are schematic diagrams of time patterns according to an embodiment.
FIG. 4 is a flowchart of a communication method according to an embodiment.
FIG. 5 is a block diagram of a communication apparatus according to an embodiment.
FIG. 6 is a block diagram of a communication apparatus according to an embodiment.
FIG. 7 is a block diagram of a communication apparatus according to an embodiment.
FIG. 8 is a block diagram of a communication apparatus according to an embodiment.

### DETAILED DESCRIPTION

Exemplary embodiments will be described in detail here, examples of which are illustrated in the accompanying drawings. When the following description refers to the drawings, the same numbers in different drawings represent the same or similar elements unless otherwise indicated. The implementations described in the following exemplary embodiments do not represent all implementations consistent with the present disclosure.

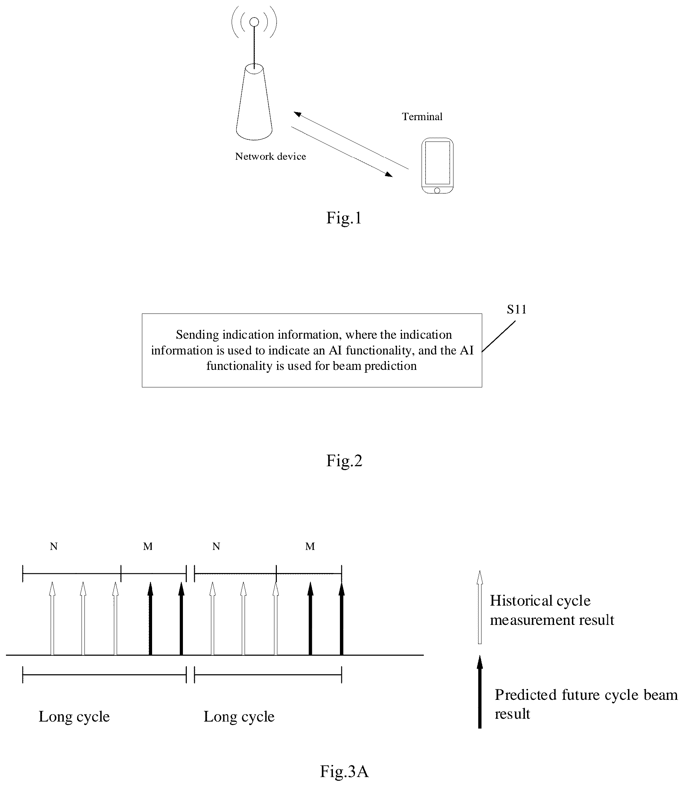

The communication method of the embodiments of the present disclosure can be applied to the wireless communication system shown in FIG. 1. Referring to FIG. 1, the wireless communication system includes a network device and a terminal. The terminal connects to the network device through wireless resources and performs data transmission.

It can be understood that the wireless communication system shown in FIG. 1 is only schematic, and the wireless communication system may also include other network devices, such as core network devices, wireless relay devices, and wireless backhaul devices, which are not shown in FIG. 1. The embodiments of the present disclosure do not limit the number of network devices and terminals included in the wireless communication system.

Furthermore, it can be understood that the wireless communication system in the embodiments of the present disclosure is a network that provides wireless communication functions. The wireless communication system may adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), and Carrier Sense Multiple Access with Collision Avoidance (CSMA/CA). Networks can be classified into 2G (generation) networks, 3G networks, 4G networks, or future evolved networks, such as 5G networks, also known as New Radio (NR) networks, based on factors such as capacity, speed, and latency. For convenience of description, the wireless communication network is sometimes referred to simply as a network in the present disclosure.

Furthermore, the network device involved in the present disclosure may also be referred to as a radio access network device. The radio access network device may be: a base station, an evolved Node B (eNB), a home base station, an access point (AP) in a wireless fidelity (WIFI) system, a wireless relay node, a wireless backhaul node, a transmission point (TP), or a transmission and reception point (TRP), etc., or may be a gNB in an NR system, or may also be a component or part of a device that constitutes a base station. It should be understood that, in the embodiments of the present disclosure, the specific technology and specific device form adopted by the network device are not limited. In the present disclosure, a network device may provide communication coverage for a specific geographical area and may communicate with terminals located within the coverage area (cell). Furthermore, in the case of a Vehicle-to-Everything (V2X) communication system, the network device may also be a vehicle-mounted device.

Furthermore, the terminal involved in the present disclosure may also be referred to as a terminal device, User Equipment (UE), Mobile Station (MS), Mobile Terminal (MT), etc., which is a device that provides voice and/or data connectivity to a user. For example, the terminal may be a handheld device with wireless connection functionality, a vehicle-mounted device, etc. Currently, some examples of terminals are: mobile phones, Customer Premise Equipment (CPE), Pocket Personal Computers (PPC), palmtop computers, Personal Digital Assistants (PDA), laptop computers, tablet computers, wearable devices, or vehicle-mounted devices. Furthermore, when it is a Vehicle-to-Everything (V2X) communication system, the terminal device may also be a vehicle-mounted device. It should be understood that the embodiments of the present disclosure do not limit the specific technology and specific device form adopted by the terminal.

In NR, especially when the communication frequency band is in frequency range 2, due to fast high-frequency channel attenuation, beam-based transmission and reception need to be used to ensure coverage.

In the traditional beam management process, the network device configures a reference signal resource set for beam measurement. The terminal measures the reference signal resources in this set and then reports the IDs of the X stronger reference signal resources and the corresponding L1-RSRP and/or L1-SINR. The problem with the traditional method is that the reference signal resource set configured by the base station includes X reference signals, each corresponding to a different transmission beam of the base station. For each reference signal, the terminal needs to use multiple reception beams to measure that reference signal and obtain the beam measurement quality corresponding to each reception beam, and determine the best beam measurement quality. Therefore, the maximum number of beam pairs that the terminal needs to measure is M*N, where M is the number of base station transmission beams and N is the number of terminal reception beams. This method requires the terminal to measure a large number of beam pairs. There is a need to reduce the number of beam pairs that the terminal needs to measure.

In recent years, artificial intelligence (AI) technology has made continuous breakthroughs in multiple fields. While bringing convenience to people's lives, it is also promoting industrial upgrading in various sectors. As AI technology intersects and penetrates other disciplinary fields, it provides new directions and methods for the development of different disciplines while integrating knowledge from various disciplines.

Taking the communication industry as an example, in the Release 18 stage of the 3rd Generation Partnership Project (3GPP) standards organization, within the RAN1 working group, discussions and determinations on potential new project content have involved a research project on AI technology in wireless air interfaces. This project aims to study how to introduce AI technology into wireless air interfaces and explore how AI technology can assist and improve wireless air interface transmission technologies.

To reduce the number of beam pairs that terminals need to measure, an AI-based prediction method is proposed. For example, the total number of beam pairs that a terminal originally needed to measure is MN (where M is the number of network device transmission beams and N is the number of terminal reception beams). However, with the AI model, for spatial beam prediction, the terminal only needs to measure a portion of the MN beam pairs, such as 1/8, 1/4, etc., and then input the beam measurement quality of these measured beam pairs into the AI model. The model can then output the beam information for the M*N beam pairs. For time-domain beam prediction, the terminal can measure the beam quality of beam pairs at historical times to predict the beam information of beam pairs at future times.

Currently, AI-based prediction of beam measurement results has been proposed, including spatial beam prediction and time-domain beam prediction. Spatial beam prediction predicts the measurement results of beams in set A based on the measurement results of beams in set B. Time-domain beam prediction: predicts the beams in set A at future times based on the measurement results of set B at historical times. Here, set B is a subset of set A, or set B consists of wide beams while set A consists of narrow beams, or in time-domain beam prediction, there is also a case where set B and set A are the same.

The principle of beam prediction using an AI model is explained below:
1. For spatial prediction: the terminal measures the L1-RSRP of set B, inputs it into the AI model, and predicts the L1-RSRP of set A or the best beam in set A. The relationship between set B and set A includes the following two types:
   (I) Set B is a subset of set A. For example, if set A includes 32 reference signals (each reference signal corresponds to a beam direction), then set B includes N of these reference signals, e.g., N=8;
   (II) Set B consists of wide beams, and set A consists of narrow beams. For example, set A includes 32 reference signals (each reference signal corresponds to a beam direction, and the 32 reference signals cover a 120-degree direction). Set B includes another N reference signals, e.g., N=8, and these N reference signals also cover the 120-degree direction, meaning each reference signal in set B covers the beam directions of multiple reference signals in set A. It can be understood that 32/N reference signals in set A have a Quasi Co-Location (QCL) Type D relationship with the same reference signal in set B.
2. For time-domain prediction, the terminal measures the L1-RSRP of set B at historical times, inputs it into the AI model, and predicts the L1-RSRP of set A at future times. Besides the two relationships mentioned above, there is another case where set B and set A are the same.

If based on the AI model, the reference signals at future times may not need to be transmitted; the beam information can be obtained based on the output of the AI model and reported to the network device. In the traditional method, the reference signals at future times also need to be transmitted, and the terminal measures the reference signals at future times to obtain and report the beam information to the network device.

In the related art, two management methods are used to manage AI models, including: management based on AI functionality and model identifier. The principle of managing models based on AI functionality can be understood as: the terminal only needs to inform the network device which AI functionalities it supports. Then, operations such as activation, deactivation, and switching of these AI functionalities require interaction between the terminal and the network device, and need to be decided by the network device or decided by the terminal and then informed to the network device. However, under a certain AI functionality, the terminal can maintain one or more AI models. If there are multiple AI models, the terminal can switch between different models under the same AI functionality by itself without the network device deciding or without informing the network device after the terminal decides. Management based on model identifier can be understood as: the terminal needs to inform the network device which models corresponding to which model identifiers it supports. Then, operations such as activation, deactivation, and switching of AI models require interaction between the terminal and the network device, and need to be decided by the network device or decided by the terminal and then informed to the network device.

Based on the above, it can be seen that management based on model identifiers makes the system more complex and gives the terminal less freedom. Therefore, the related art supports model management based on AI functionality to reduce system complexity. Here, AI functionality can be understood as functionality.

In the related art, for model management based on AI functionality, how to determine the parameter information corresponding to an AI functionality, and which parameter information, when different, corresponds to different AI functionalities, are problems that need to be solved.

The parameter information corresponding to the AI functionality involved in the embodiments of the present disclosure may refer to the parameter information of the input and output of the AI functionality, the parameter information of the AI model used by the AI functionality, etc.

The embodiments of the present disclosure provide a communication method. In this communication method, a device based on AI communication sends information indicating an AI functionality to facilitate the reporting of parameter information related to the AI functionality, enabling different devices based on AI communication to clarify the managed AI functionality, thereby reducing the transmission of signaling and signals related to AI functionality management.

In the embodiments of the present disclosure, the information indicating the AI functionality may be referred to as indication information. This indication information is sent by a device based on AI functionality communication and received by another device. For convenience of description, the device sending the indication information is referred to as a first device, and the device receiving the indication information is referred to as a second device.

The first device may be a terminal, and the second device may be a radio access network device or a core network device. Alternatively, the first device may be a radio access network device or a core network device, and the second device may be a terminal.

FIG. 2 is a flowchart of a communication method according to an embodiment. As shown in FIG. 2, the communication method is performed by a first device and includes the following steps.

Step S11: sending indication information, where the indication information is used to indicate an AI functionality, and the AI functionality is used for beam prediction.

In this embodiment of the present disclosure, the first device sends indication information to enable the first device and the second device to clarify the AI functionality.

The first device may be a terminal device, and the second device may be a network device. For example, if the first device sends indication information indicating an AI functionality used for beam prediction, the second device receiving the indication information can clarify that the first device supports the AI functionality indicated by the indication information. The terminal supporting the AI functionality can also be understood as terminal capability information.

In an embodiment of the communication method provided by this embodiment of the present disclosure, the indication information includes the AI functionality. This can also be understood as the terminal directly reporting the supported AI functionality. That is, the first device may be a terminal device, and the second device may be a network device.

In an embodiment of the communication method provided by this embodiment of the present disclosure, different AI functionalities correspond to different parameter information. The implementation can be that the protocol defines different AI functionalities and the parameter information corresponding to each AI functionality. Then, when the terminal reports terminal capability information, it can directly report support for this AI functionality. That is, the first device may be a terminal device, and the second device may be a network device.

In an embodiment of the communication method provided by this embodiment of the present disclosure, the parameter information corresponding to each AI functionality may also be included in the indication information. This can also be understood as the indication information including parameter information, which is the parameter information corresponding to the AI functionality. The AI functionality can be determined through the parameter information.

For example, if the protocol does not specify the parameter information corresponding to each AI functionality, and the network device has not configured the parameter information corresponding to each AI functionality, the parameter information corresponding to the AI functionality can be included in the indication information. That is, the first device may be a terminal device, and the second device may be a network device.

The first device may also be a network device, and the second device may be a terminal device. For example, the network device sends configuration information, which is used to indicate at least one AI functionality and the parameter information corresponding to each AI functionality.

In an embodiment of the communication method provided by this embodiment of the present disclosure, the parameter information includes at least one of A-G below:
A. An application instance corresponding to the AI functionality.
B. A set relationship between a first set and a second set corresponding to the AI functionality, where the first set and the second set include a transmission beam of a network device and/or a reception beam of a terminal device.
C. Beam information of a first set and/or a second set corresponding to the AI functionality, where the first set and the second set include a transmission beam of a network device and/or a reception beam of a terminal device.
D. Time information of a first set and/or a second set corresponding to the AI functionality, where the first set and the second set include a transmission beam of a network device and/or a reception beam of a terminal device, and the AI functionality is used for time-domain beam prediction.
E. Network device coverage parameter information.
F. Terminal distribution information.
G. Terminal mobility information.

In an embodiment of this embodiment of the present disclosure, the application instance corresponding to the AI functionality includes any one of A-C below:
A. Spatial beam prediction;
B. Time-domain beam prediction;
C. Spatial beam prediction and time-domain beam prediction.

Spatial beam prediction and time-domain beam prediction are similar to those involved in the above embodiments and will not be repeated here.

In this embodiment of the present disclosure, spatial beam prediction, time-domain beam prediction, and spatial beam prediction combined with time-domain beam prediction correspond to different AI functionalities. That is, different application instances correspond to different AI functionalities.

In an embodiment of this embodiment of the present disclosure, the set relationship between the first set and the second set includes at least one of A-C below:
A. The first set is a subset of the second set.
   The first set is a subset of the second set, the first set and the second set can be used for spatial beam prediction or time-domain beam prediction.
B. The first set is different from the second set.
   Where the first set is different from the second set, the first set and the second set can be used for spatial beam prediction or time-domain beam prediction.
C. The first set is identical to the second set.
   The first set is identical to the second set, the first set and the second set can be used for time-domain beam prediction.

In an embodiment of this embodiment of the present disclosure, the beam information of the first set and/or the second set corresponding to the AI functionality includes at least one of A-E below:
A. The quantity of beams included in the first set corresponding to the AI functionality, or the quantity range within which the quantity of beams included in the first set corresponding to the AI functionality falls.
   Exemplarily, the quantity of beams included in the first set may be, for example, 1 beam, 2 beams, 3 beams, etc., or 5 beams, 9 beams, etc., and the specific quantity is not limited. The quantity range within which the quantity of beams included in the first set corresponding to the AI functionality falls may be, for example, one or more quantity ranges. The one or more quantity ranges may be, for example, 1~8 beams as a first quantity range, 9~16 beams as a second quantity range. Or the one or more quantity ranges may be, for example, 1~3 beams as a third quantity range, 4~32 beams as a fourth quantity range. It can be understood that when the quantity of beams included in the first set is different, it may correspond to different AI functionalities; or when the quantity of beams included in the first set falls within different quantity ranges, it may correspond to different AI functionalities, and if the quantity of beams included in the first set falls within the same quantity range, it may correspond to the same AI functionality. The beams include transmission beams of the network device and/or reception beams of the terminal device.
B. The positions of the beams included in the first set corresponding to the AI functionality within the beams included in the second set. This situation applies where the first set is a subset of the second set.
   Exemplarily, the second set includes 32 beams, for example, numbered 1, 2, 3, ..., 32. The first set includes beams from the second set with numbers: 1, 5, 9, 13, ..., 29. That is, the positions of the beams included in the first set within the beams included in the second set are the 1st, 5th, 9th, 13th, ..., 29th positions, respectively. Or the first set includes beams from the second set with numbers: 2, 6, 10, 14, ..., 30. That is, the positions of the beams included in the first set within the beams included in the second set are the 2nd, 6th, 10th, 14th, ..., 30th positions, respectively. It can be understood that when the positions of the beams included in the first set within the beams included in the second set are different, it may correspond to different AI functionalities; or when the positions of the beams included in the first set within the beams included in the second set are different, it may correspond to the same AI functionality. The beams include transmission beams of the network device and/or reception beams of the terminal device.
C. The quantity of beams included in the second set corresponding to the AI functionality, or the quantity range within which the quantity of beams included in the second set corresponding to the AI functionality falls.
   Exemplarily, the quantity of beams included in the second set may be, for example, 1 beam, 2 beams, 3 beams, etc., or 5 beams, 9 beams, etc., and the specific quantity is not limited. The quantity range within which the quantity of beams included in the second set corresponding to the AI functionality falls may be, for example, one or more quantity ranges. The one or more quantity ranges may be, for example, 1~8 beams as a first beam quantity range, 9~16 beams as a second beam quantity range. Or the one or more beam quantity ranges may be, for example, 1~3 beams as a third beam quantity range, 4~32 beams as a fourth beam quantity range. It can be understood that when the quantity of beams included in the second set is different, it may correspond to different AI functionalities; or when the quantity of beams included in the second set falls within different quantity ranges, it may correspond to different AI functionalities, and if the quantity of beams included in the second set falls within the same quantity range, it may correspond to the same AI functionality. The beams include transmission beams of the network device and/or reception beams of the terminal device.
D. The ratio of the quantity of beams corresponding to the first set to the quantity of beams corresponding to the second set. This situation applies where the first set is a subset of the second set, or where the first set is different from the second set.
   Exemplarily, the ratio of the quantity of beams corresponding to the first set to the quantity of beams corresponding to the second set includes the ratio of the quantity of beams in the first set to the quantity of beams in the second set. The quantity of beams in the first set may be the quantity of transmission beams of the network device and/or reception beams of the terminal device. The quantity of beams in the second set may be the quantity of transmission beams of the network device and/or reception beams of the terminal device. If the quantity of beams in the first set is 8 and the quantity of beams in the second set is 32, the ratio of the quantity of beams corresponding to the first set to the quantity of beams corresponding to the second set is 1/4. If the quantity of beams in the first set is 4 and the quantity of beams in the second set is 32, the ratio is 1/8.
   It can be understood that when the ratio of the quantity of beams corresponding to the first set to the quantity of beams corresponding to the second set is different, it may correspond to different AI functionalities. Or when the ratio is the same, it may correspond to the same AI functionality.
E. A mapping relationship between the beams included in the first set and the beams included in the second set. This situation applies where the first set is different from the second set.

Exemplarily, the first set may include wide beams. The second set includes narrow beams. The mapping relationship between the beams included in the first set and the beams included in the second set may be a mapping relationship between wide beams and narrow beams. For example, the first set is different from the second set, e.g., the first set includes wide beams numbered 1~8, and the second set includes narrow beams numbered 1~32. One mapping relationship is that the first wide beam corresponds to narrow beams numbered 1~4, and so on; or the first wide beam corresponds to narrow beams numbered 2~5, and so on.

It can be understood that different mapping relationships between the beams included in the first set and the beams included in the second set correspond to different AI functionalities. Or different mapping relationships correspond to the same AI functionality.

In an embodiment, different set relationships correspond to different AI functionalities.

In an embodiment of this embodiment of the present disclosure, the first set is a subset of the second set. Exemplarily, the second set includes 32 beams, numbered 1, 2, 3, 4, ..., 32. The first set includes a portion of the beams in the second set, for example, the first set contains beams from the second set with numbers: 1, 5, 9, 13, ..., 29.

The correspondence between parameter information and AI functionality, i.e., different set relationships corresponding to different AI functionalities, may include the following scenarios:
A. First sets with different quantities of beams correspond to different AI functionalities; or
B. First sets whose quantities of beams fall within different quantity ranges correspond to different AI functionalities; or
C. First sets with different quantities of beams correspond to the same AI functionality; or
D. First sets whose quantities of beams fall within different quantity ranges correspond to the same AI functionality; or
E. first sets whose beam compositions correspond to different beam positions in the second set correspond to different AI functionalities, wherein the first sets each has a respective beam composition; or
F. first sets whose beam compositions correspond to different beam positions in the second set correspond to the same AI functionality, wherein the first sets each has a respective beam composition;
G. Different ratios of the quantity of beams corresponding to the first set to the quantity of beams corresponding to the second set correspond to different AI functionalities; or
H. Different ratios of the quantity of beams corresponding to the first set to the quantity of beams corresponding to the second set correspond to the same AI functionality.

The understanding of different set relationships corresponding to different AI functionalities can be as follows:

Any two different quantities among different beam quantities are referred to as a first beam quantity and a second beam quantity. For example, the first beam quantity is 1 beam. The second beam quantity is 2 beams.

In this embodiment of the present disclosure, a first AI functionality corresponds to a first set with the first beam quantity, and a second AI functionality corresponds to a first set with the second beam quantity. The first AI functionality is different from the second AI functionality, or the first AI functionality is the same as the second AI functionality.

Any two different quantity ranges among different beam quantity ranges are referred to as a first beam quantity range and a second beam quantity range. 1~8 beams is the first beam quantity range, 9~16 beams is the second beam quantity range.

In this embodiment of the present disclosure, a first AI functionality corresponds to a first set/second set whose beam quantity falls within the first beam quantity range, and a second AI functionality corresponds to a first set/second set whose beam quantity falls within the second beam quantity range. The first AI functionality is different from the second AI functionality, or the first AI functionality is the same as the second AI functionality.

Different ratios of the quantity of beams corresponding to the first set to the quantity of beams corresponding to the second set are referred to as a first ratio and a second ratio. For example, the first ratio is 1/4. The second ratio is 1/8.

In this embodiment of the present disclosure, a first AI functionality corresponds to the first ratio, and a second AI functionality corresponds to the second ratio. The first AI functionality is different from the second AI functionality, or the first AI functionality is the same as the second AI functionality.

In an embodiment of this embodiment of the present disclosure, the first set is different from the second set. The correspondence between parameter information and AI functionality, i.e., different set relationships corresponding to different AI functionalities, may include the following scenarios:
A. Different ratios of the quantity of beams corresponding to the first set to the quantity of beams corresponding to the second set correspond to different AI functionalities; or
B. Different ratios of the quantity of beams corresponding to the first set to the quantity of beams corresponding to the second set correspond to the same AI functionality.

It can be understood that for the implementation of different ratios corresponding to the same AI functionality or different AI functionalities reference can be made to the relevant descriptions in the above embodiments and details will not be repeated here.

In this embodiment of the present disclosure, different AI functionalities can be determined based on the application instance corresponding to the AI functionality and the set relationship between the first set and the second set.

For example, for spatial beam prediction, the first set being a subset of the second set and the first set being different from the second set correspond to different AI functionalities, respectively.

For another example, for time-domain beam prediction, the first set being a subset of the second set, the first set being different from the second set, and the first set being identical to the second set correspond to different AI functionalities, respectively.

In an embodiment of this embodiment of the present disclosure, the time information of the first set and/or the second set corresponding to the AI functionality includes at least one of:
A. The quantity of time instances corresponding to the first set, or the quantity range within which the quantity of time instances corresponding to the first set falls.
B. The quantity of time instances corresponding to the second set, or the quantity range within which the quantity of time instances corresponding to the second set falls.
C. The time pattern of the time corresponding to the first set and the time corresponding to the second set.

The quantity of time instances involved in this embodiment of the present disclosure can be understood as the number of time instances. The quantity of time instances corresponding to the first set can be understood as history measurement time instances; the quantity of time instances corresponding to the second set can be understood as predicted future time instances.

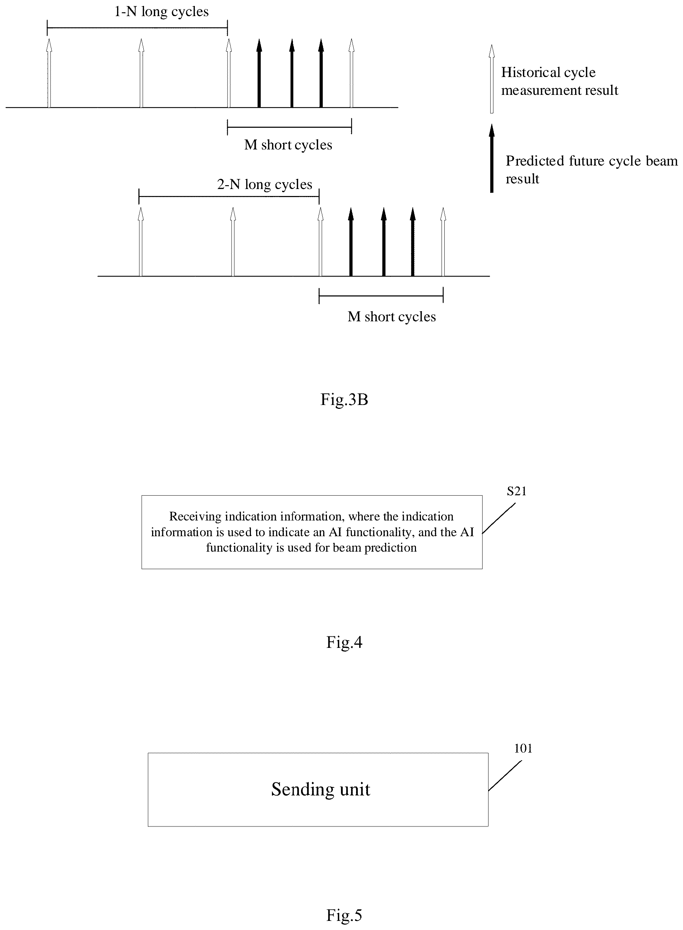

For the time pattern of the time corresponding to the first set and the time corresponding to the second set reference can be made to FIG. 3A and FIG. 3B. Referring to FIG. 3A and FIG. 3B, the time pattern involved in this embodiment of the present disclosure may include a repeating time pattern (repeat pattern) of historical measurement time and predicted future time.

In FIG. 3A, the black parts are predicted, and the green parts indicate periods without measurement results; the measurement time is discontinuous. The repeat pattern is a period of N white plus M black as shown in FIG. 3A. That is, for the network device, it needs to send reference signals for the terminal to measure in each of N cycles, and then for the next M cycles, it does not need to send reference signals; the terminal relies on model prediction.

In FIG. 3B, the black parts are predicted, but the black parts are within a long cycle, and each long cycle has a measurement result, so the measurement time is continuous and periodic. The repeat pattern is actually one long cycle plus multiple short cycles within the long cycle. That is, for the network device, it only needs to periodically send reference signals for the terminal to measure in each long cycle, and the beam quality in the short cycles within the long cycle is predicted by the terminal device based on the model.

In an embodiment, different quantities of time instances correspond to different AI functionalities. A different number of predicted future time instances corresponds to different AI functionalities. And/or a different number of measured historical measurement time instances corresponds to different AI functionalities.

In another implementation, different time patterns correspond to different AI functionalities. For example, within time-domain beam prediction, different repeat patterns of historical measurement time and predicted future time correspond to different functionalities.

Continuing to refer to FIG. 3A and FIG. 3B, in FIG. 3A, N historical cycle measurement results plus M predicted future cycle beam results form one repeat pattern. Then, during these M predicted future cycles, the base station may not send reference signals for beam prediction. However, since the beam results during these M predicted future cycles are predicted and cannot be used as model input, after M cycles, the radio access device sends reference signals for beam prediction again in N cycles, and then a repeat pattern is performed. FIG. 3B uses N historical long cycle measurement results to predict the beam results of M short cycles contained in the (N+1)th historical long cycle. Then the base station needs to send reference signals for beam measurement in each long cycle, and the terminal can predict the beam results in each short cycle. So this repeat pattern can be simplified to a pattern of multiple short cycles contained in one long cycle.

Therefore, the patterns in FIG. 3A and FIG. 3B correspond to different modes of the network device sending reference signals and the terminal reporting measurement results.

In this embodiment of the present disclosure, the network device coverage parameter may be information characterizing the coverage range between network devices, or it may be the deployment type of the network device.

In an embodiment of this embodiment of the present disclosure, the network device coverage parameter information includes at least one of:
A. The spacing between network devices (inter-site distance, ISD).
   In this embodiment of the present disclosure, the specific value setting of the spacing between network devices should be determined in combination with the deployment type selected by the corresponding network device. Taking urban macro cell as an example, the corresponding network device spacing can be arranged as 100m, 200m, 500m, 1000m, etc.
B. Deployment type.

The deployment type includes at least one of: urban macro (Uma), urban micro (Umi), indoor hotspot (indoor), dense urban, or rural.

In this embodiment of the present disclosure, different deployment types correspond to different AI functionalities, or different deployment types correspond to the same AI functionality.

For example, in different scenarios such as Uma, Umi, or indoor, they may correspond to different functionalities; or they may correspond to one or more models under the same functionality. If there are multiple models, the terminal switches between different models by itself.

In this embodiment of the present disclosure, different spacings between network devices correspond to different AI functionalities, or different spacings between network devices correspond to the same AI functionality.

For example, under different ISD (inter-site distance, i.e., the spacing between different network devices) conditions, they may correspond to different functionalities, or they may correspond to one or more models under the same functionality. If there are multiple models, the terminal switches between different models by itself.

The terminal distribution information in this embodiment of the present disclosure is used to describe the geographical distribution of terminals, for example, whether they are located indoors or outdoors. It can also be the relationship between different geographical distributions. For example, the quantitative relationship of terminals in different geographical distributions.

In an embodiment of this embodiment of the present disclosure, the terminal distribution information includes the ratio of the quantity of outdoor terminals to the quantity of indoor terminals.

It can be understood that the terminal distribution information includes the quantity of outdoor terminals. Or in this embodiment of the present disclosure, the terminal distribution information includes the quantity of indoor terminals.

Exemplarily, information about the quantity and corresponding ratio of indoor and outdoor terminals can be obtained by relevant devices based on statistics of the number of terminals accessing the network within a target range. For example, statistics show 100 indoor terminals and 200 outdoor terminals, so the ratio of outdoor terminals to indoor terminals is 2: 1.

In an embodiment, different terminal distribution information corresponds to different AI functionalities, or different terminal distribution information corresponds to the same AI functionality.

When the quantity and corresponding ratio of indoor and outdoor terminal distribution are different, they correspond to different AI functionalities or the same functionality.

For example, when the ratio of outdoor terminals to indoor terminals (Outdoor vs indoor UE ratio) is different, it may correspond to different functionalities, or it may correspond to one or more models under the same functionality. If there are multiple models, the terminal switches between different models by itself.

The terminal mobility information in this embodiment of the present disclosure can be understood as motion information used to describe the terminal's movement process.

In an embodiment of this embodiment of the present disclosure, the terminal mobility information includes at least one of:
A. Terminal movement speed.
B. Terminal movement acceleration.
C. Terminal movement direction and terminal movement trajectory.

In an embodiment, different terminal mobility information corresponds to different AI functionalities, or different terminal mobility information corresponds to the same AI functionality.

For example, different movement speeds correspond to one or more models under the same functionality. If there are multiple models, the terminal switches between different models by itself.

In an embodiment, the first set is a beam set corresponding to an input value of an AI model, and the second set is a beam set corresponding to an output of the model. For example, the first set in this embodiment of the present disclosure may be the set B involved in the above related art, and the second set may be the set A involved in the above related art.

In an embodiment of the communication method provided by this embodiment of the present disclosure, the parameter information corresponding to the AI functionality is predefined by a protocol, or configured by configuration information sent by a network device, or indicated based on indication information sent by a network device or a terminal device.

In this embodiment of the present disclosure, different AI functionalities correspond to different identifiers, such as names. Based on the parameter information corresponding to each functionality, the AI functionality can be determined.

Of course, in this embodiment of the present disclosure, it is also possible that the protocol specifies which parameter information corresponds to which AI functionality, or the second device (e.g., a radio access network device or a core network device) configures which parameter information corresponds to which AI functionality, and the first device (e.g., a terminal) only needs to report the AI functionality.

The communication method provided by this embodiment of the present disclosure, by indicating the AI functionality used for beam prediction through indication information, can reduce the number of AI functionalities. Some different parameters can also correspond to the same AI functionality, and one AI functionality can also correspond to one or more models. The switching between these multiple models is managed by the first device (e.g., the terminal) itself without informing the second device (e.g., the access network device), thus reducing the transmission of signaling and reference signals related to model management.

In the communication method provided by this embodiment of the present disclosure, the first device may be a terminal, which sends indication information to an access network device or a core network device to inform the second device (the radio access network device or the core network device) of the functionality supported by the terminal. For example, the indication information may also include parameter information, which is used to indicate the AI functionality corresponding to the parameter information.

In the communication method provided by this embodiment of the present disclosure, the first device may be a radio access network device or a core network device. The first device sends indication information to the second device (the terminal) to inform the terminal of the parameter information of the AI functionality corresponding to the AI functionality.

In an embodiment, in response to the first device being a radio access network device or a core network device, or the parameter information corresponding to the AI functionality being predefined by a protocol, the indication information indicates at least two AI functionalities, and the at least two functionalities are different AI functionalities. In response to the first device being a terminal, the indication information indicates at least one AI functionality.

The parameter information corresponding to each AI functionality in this embodiment of the present disclosure may be specified by the protocol, configured by configuration information sent by the network device, or indicated based on indication information sent by the network device or the terminal.

This embodiment of the present disclosure includes two types of parameter information: first-type parameter information and second-type parameter information. Where the first-type parameter information is different, it must correspond to different AI functionalities. Where the second-type parameter information is different, it may correspond to the same AI functionality or to different AI functionalities. For the first-type parameter information, it must be consistent between the first device and the second device. It can also be understood that when the protocol defines an AI functionality, it needs to clearly specify the first-type parameter information corresponding to that AI functionality; or the first device and the second device need to transmit the first-type parameter information corresponding to each AI functionality. For example, if the set relationship between the first set and the second set is different, different set relationships must correspond to different AI functionalities. Therefore, both the first device and the second device can determine that the first AI functionality corresponds to the first set relationship, and the second AI functionality corresponds to the second set relationship.

The second-type parameter information is optionally transmitted between the first device and the second device. That is, the first device may indicate the parameter information corresponding to the same AI functionality to the second device, or may not indicate it.

In one example, if the parameter information corresponding to the AI functionality is predefined by the protocol, the first device and the second device may not transmit this protocol-predefined parameter information. If the first device is a terminal, the terminal needs to inform the network device of at least one AI functionality it supports. In this case, the protocol-predefined parameter information must also include the first-type parameter information, and the second-type parameter information is optionally included.

In one example, if the parameter information corresponding to the AI functionality is configured by the network device, then the network device needs to configure the parameter information corresponding to each different AI functionality. If the first device is a terminal, the terminal needs to inform the network device of at least one AI functionality it supports. In this case, the parameter information configured by the network device must also include the first-type parameter information, and the second-type parameter information is optionally included.

In one example, the protocol does not specify the parameter information corresponding to each AI functionality, and the network device has not configured the parameter information corresponding to each AI functionality. If the first device is a terminal, then the terminal needs to report the parameter information corresponding to each AI functionality. In this case, the parameter information reported by the terminal must also include the first-type parameter information, and the second-type parameter information is optionally included.

In an embodiment, the AI functionality can be understood as a capability of the terminal. In this embodiment of the present disclosure, the AI functionality is a capability that the terminal must support, or the AI functionality is a capability that the terminal optionally supports.

In an embodiment, the AI functionality includes a first AI functionality and a second AI functionality. The first AI functionality is a prerequisite requirement for the second functionality. In one example, the first AI functionality corresponds to the terminal supporting spatial beam prediction, and the second AI functionality corresponds to the terminal supporting spatial beam prediction where the first set is a subset of the second set. That is, the terminal supporting spatial beam prediction is a prerequisite requirement for supporting spatial beam prediction where the first set is a subset of the second set.

In this embodiment of the present disclosure, different parameter information can also correspond to the same AI functionality, and one AI functionality can correspond to one or more models, thereby reducing the number of AI functionalities. Moreover, the switching between multiple models under an AI functionality is managed by the terminal itself without informing the access network device, thus reducing the transmission of signaling and reference signals related to model management.

The present disclosure will be described below in conjunction with examples regarding the communication method involved in the above embodiments. The first set is taken as set B and the second set as set A for illustration.

In an embodiment, a first device sends indication information, where the indication information is used to indicate an AI functionality, and the AI functionality is used for beam prediction.

The parameter information of the AI functionality includes at least one of the following 1 to 13:
1. AI functionality;
2. An application instance corresponding to the AI functionality;
3. The relationship between a first set (set B) and a second set (set A) corresponding to the AI functionality;
4. The quantity of beams (beam pairs) in the first set, or the range within which the quantity falls;
5. The positions of the beams (beam pairs) in the first set corresponding to the beams (beam pairs) in the second set. (Where Set B is a subset of set A.)
6. The quantity of beams (beam pairs) in the second set;
7. The ratio of the quantity of beams (beam pairs) in the first set to the quantity of beams (beam pairs) in the second set. (Where Set B is different from set A.)
8. The mapping relationship between the beams (beam pairs) in the first set and the beams (beam pairs) in the second set. (Where Set B is different from set A.)
9. The quantity of time instances corresponding to the second set (the quantity of predicted future time instances). (This applies to time-domain beam prediction.)
10. The pattern of time corresponding to the first set and time corresponding to the second set. (This applies to time-domain beam prediction.)
11. Base station coverage-related parameter information;
12. User distribution;
13. Mobility information.

The application instance includes at least one of the following 1-3:
1. Spatial beam prediction
2. Time-domain beam prediction
3. Spatial beam prediction and time-domain beam prediction

In an embodiment, different application instances correspond to different AI functionalities.

In an embodiment, the first set is a beam (beam pair) set corresponding to the input value of the model, and the second set is a beam (beam pair) set corresponding to the output of the model.

In an embodiment, the relationship between the first set and the second set includes at least one of the following:
Set B is a subset of set A
   Applicable to both spatial beam prediction and time-domain beam prediction.
Set B is different from set A
   Applicable to both spatial beam prediction and time-domain beam prediction.
Set B = set A
   Only applicable to time-domain beam prediction.

In an embodiment, different relationships between the first set and the second set correspond to different AI functionalities.

In an embodiment, different quantities of time instances corresponding to the second set correspond to different AI functionalities.

In an embodiment, different patterns of time corresponding to the first set and the second set correspond to different AI functionalities.

In an embodiment, the base station coverage-related parameter information includes deployment types such as Urban macro, Urban micro, indoor, dense urban, rural.

In an embodiment, different deployment types correspond to different functionalities, or different deployment types correspond to the same functionality (further, the corresponding model IDs may be different).

In an embodiment, the base station coverage-related parameter information includes the spacing between base stations. For example, ISD is 200m, 500m, 1000m, 100m, etc.

In an embodiment, different station spacings correspond to different functionalities, or different station spacings correspond to the same functionality (further, the corresponding model IDs may be different).

In an embodiment, the user distribution includes the ratio of outdoor UEs to indoor UEs.

In an embodiment, different user distributions correspond to different functionalities, or different user distributions correspond to the same functionality (further, the corresponding model IDs may be different).

In an embodiment, when Set B is a subset of set A, it may include the following situations:
1. Different quantities of beams (beam pairs) in the first set or different quantity ranges correspond to different functionalities; or different quantities of beams (beam pairs) in the first set or different quantity ranges correspond to the same functionality (further, the corresponding model IDs may be different).
   That is, if the number of beams in Set B is different, it can correspond to different functionalities; or it may not be distinguished. For example, as long as the number of set B is within a certain range, the corresponding functionality is the same.
2. Different positions of the beams (beam pairs) in the first set corresponding to the beams (beam pairs) in the second set correspond to different functionalities; or different positions of the beams (beam pairs) in the first set corresponding to the beams (beam pairs) in the second set correspond to the same functionality (further, the corresponding model IDs may be different).
   That is, if the pattern of Set B is different, it can distinguish different functionalities; or it may not be distinguished. For example, the model is applicable to multiple pre-configured patterns, or multiple models each applicable to different patterns but corresponding to the same functionality. The terminal selects the corresponding model based on the reference signal resources sent by the base station to obtain set B.

In an embodiment, when Set B is different from set A, it may include the following situations:
1. Different ratios of the quantity of beams (beam pairs) in the first set to the quantity of beams (beam pairs) in the second set correspond to different functionalities; or different ratios of the quantity of beams (beam pairs) in the first set to the quantity of beams (beam pairs) in the second set correspond to the same functionality (further, the corresponding model IDs may be different).

That is, different quantity ratios between Set B and set A can correspond to different functionalities; or they may not be distinguished. For example, use a generalized model, or different ratios correspond to different models, but the terminal switches by itself under one functionality.

In this embodiment of the present disclosure, the first device may be a UE. The UE sends the above information to an access network device or a core network device to inform them that the UE supports the AI functionality corresponding to the parameter information.

In this embodiment of the present disclosure, the first device may be an access network device or a core network device, used to inform the terminal of the parameter information of the AI functionality corresponding to the AI functionality.

In this embodiment of the present disclosure, only the parameter information that must correspond to different functionalities needs to be transmitted; others are optional.

It can be understood that the above functionality in this embodiment of the present disclosure is a capability that the terminal optionally or mandatorily supports.

In an embodiment, the terminal capability corresponding to a first functionality is a prerequisite for the terminal capability corresponding to a second functionality. For example, the first functionality corresponds to the terminal supporting spatial beam prediction, and the second functionality corresponds to the terminal supporting spatial beam prediction where set B is a subset of set A.

Based on the above implementation, the following examples can be included:
Example 1: Spatial beam prediction, time-domain beam prediction, and spatial + time-domain beam prediction correspond to different functionalities, respectively.
Example 2: Within spatial beam prediction:
   A: Any two of the following correspond to different functionalities:
      Set B is a subset of set A
      Set B is different from set A
   B: Within "Set B is a subset of set A", including the following situations:
      If the number of beams in Set B is different, it can distinguish different functionalities; or it may not be distinguished. For example, as long as the number of set B is within a certain range, the corresponding functionality is the same.
      If the pattern of Set B is different, it can distinguish different functionalities; or it may not be distinguished. For example, the model is applicable to multiple pre-configured patterns, or multiple models each applicable to different patterns but corresponding to the same functionality. The terminal selects the corresponding model based on the reference signal resources sent by the base station to obtain set B.
   C: "Set B is different from set A", may include the following situations:
      Different quantity ratios between Set B and set A can distinguish different functionalities; or they may not be distinguished. For example, use a generalized model, or different ratios correspond to different models, but the terminal switches by itself under one functionality.
   D: Different numbers of transmission beams (Tx) in set A may not distinguish functionality. For example, the terminal has a generalized model, or the terminal has multiple models corresponding to different numbers of Tx beams, but they correspond to the same functionality.
   E: In different scenarios such as Uma, Umi, or indoor, functionality can be distinguished; or functionality may not need to be distinguished, and the terminal switches by itself.
   F: Under different ISD (inter-site distance, i.e., the spacing between different base stations) conditions, functionality can be distinguished; or functionality may not need to be distinguished, and the terminal switches by itself.
   G: When the Outdoor vs indoor UE ratio is different, functionality can be distinguished; or functionality may not need to be distinguished, and the terminal switches by itself.
Example 3: Within time-domain beam prediction,
   A: The following three correspond to different functionalities:
      Set B is a subset of set A
      Set B is different from set A
      Set B = set A
   B: Within time-domain beam prediction, different quantities of predicted future time instances correspond to different functionalities.
   C: Within time-domain beam prediction, different repeat patterns of historical measurement time and predicted future time correspond to different functionalities. For example, different repeat patterns of historical measurement time and predicted future time may include the following situations:
      Under Pattern1 shown in FIG. 3A, N historical cycle measurement results plus M predicted future cycle beam results form one repeat pattern. Then, during these M predicted future cycles, the base station may not send reference signals for beam prediction. However, since the beam results during these M predicted future cycles are predicted and cannot be used as model input, after M cycles, the base station sends reference signals for beam prediction again in N cycles, and then a repeat pattern is performed.
      Pattern 2 shown in FIG. 3B uses N historical long cycle measurement results to predict the beam results of M short cycles contained in the (N+1)th historical long cycle. Then the base station needs to send reference signals for beam measurement in each long cycle, and the terminal can predict the beam results in each short cycle, so this repeat pattern can be simplified to a pattern of multiple short cycles contained in one long cycle.
   D: Different movement speeds do not need to distinguish functionality; the terminal switches by itself.

It can be understood that others are the same as spatial beam prediction.

The present disclosure proposes a method for transmitting parameter information related to AI functionality, improving the management efficiency of AI-based beam prediction models.

Based on the same concept, the embodiments of the present disclosure also provide a communication method applied to a second device.

FIG. 4 is a flowchart of a communication method according to an embodiment. As shown in FIG. 4, the communication method is performed by a second device and includes the following steps.

Step S21: receiving indication information, where the indication information is used to indicate an AI functionality, and the AI functionality is used for beam prediction.

In this embodiment of the present disclosure, the second device receives the indication information sent by the first device.

The first device may be a terminal device, and the second device may be a network device. For example, if the first device sends indication information indicating an AI functionality used for beam prediction, the second device receiving the indication information can clarify that the first device supports the AI functionality indicated by the indication information. The terminal supporting the AI functionality can also be understood as terminal capability information.

In an embodiment of the communication method provided by this embodiment of the present disclosure, the indication information includes the AI functionality. This can also be understood as the terminal directly reporting the supported AI functionality. That is, the first device may be a terminal device, and the second device may be a network device.

In an embodiment of the communication method provided by this embodiment of the present disclosure, different AI functionalities correspond to different parameter information. The implementation can be that the protocol defines different AI functionalities and the parameter information corresponding to each AI functionality. Then, when the terminal reports terminal capability information, it can directly report support for this AI functionality. That is, the first device may be a terminal device, and the second device may be a network device.

In an embodiment of the communication method provided by this embodiment of the present disclosure, the parameter information corresponding to each AI functionality may also be included in the indication information. This can also be understood as the indication information including parameter information, which is the parameter information corresponding to the AI functionality. The AI functionality can be determined through the parameter information.

For example, if the protocol does not specify the parameter information corresponding to each AI functionality, and the network device has not configured the parameter information corresponding to each AI functionality, the parameter information corresponding to the AI functionality can be included in the indication information. That is, the first device may be a terminal device, and the second device may be a network device.

The first device may also be a network device, and the second device may be a terminal device. For example, the network device sends configuration information, which is used to indicate at least one AI functionality and the parameter information corresponding to each AI functionality.

It can be understood that the indication information received by the second device in this embodiment of the present disclosure is the same as or similar to the indication information sent by the first device described above. Therefore, for the AI functionality, parameter information, and the relationship between AI functionality and parameter information involved in the communication method performed by the second device, reference may be made to the relevant descriptions in the above embodiments, and details are not repeated here. For example,

In an embodiment, the parameter information includes at least one of A-G below:
A. An application instance corresponding to the AI functionality.
B. A set relationship between a first set and a second set corresponding to the AI functionality, where the first set and the second set include a transmission beam of a network device and/or a reception beam of a terminal device.
C. Beam information of a first set and/or a second set corresponding to the AI functionality, where the first set and the second set include a transmission beam of a network device and/or a reception beam of a terminal device.
D. Time information of a first set and/or a second set corresponding to the AI functionality, where the first set and the second set include a transmission beam of a network device and/or a reception beam of a terminal device, and the AI functionality is used for time-domain beam prediction.
E. Network device coverage parameter information.
F. Terminal distribution information.
G. Terminal mobility information.

In an embodiment of this embodiment of the present disclosure, the application instance corresponding to the AI functionality includes any one of A-C below:
A. Spatial beam prediction;
B. Time-domain beam prediction;
C. Spatial beam prediction and time-domain beam prediction.

In this embodiment of the present disclosure, spatial beam prediction, time-domain beam prediction, and spatial beam prediction combined with time-domain beam prediction correspond to different AI functionalities. That is, different application instances correspond to different AI functionalities.

In an embodiment, the set relationship between the first set and the second set includes at least one of A-C below:
A. The first set is a subset of the second set.
   Where the first set is a subset of the second set, the first set and the second set can be used for spatial beam prediction or time-domain beam prediction.
B. The first set is different from the second set.
   Where the first set is different from the second set, the first set and the second set can be used for spatial beam prediction or time-domain beam prediction.
C. The first set is identical to the second set.
   The first set is identical to the second set, the first set and the second set can be used for time-domain beam prediction.

In an embodiment of this embodiment of the present disclosure, the beam information of the first set and/or the second set corresponding to the AI functionality includes at least one of A-E below:
A. The quantity of beams included in the first set corresponding to the AI functionality, or the quantity range within which the quantity of beams included in the first set corresponding to the AI functionality falls.
   Exemplarily, the quantity of beams included in the first set may be, for example, 1 beam, 2 beams, 3 beams, etc., or 5 beams, 9 beams, etc., and the specific quantity is not limited. The quantity range within which the quantity of beams included in the first set corresponding to the AI functionality falls may be, for example, one or more quantity ranges. The one or more quantity ranges may be, for example, 1~8 beams as a first quantity range, 9~16 beams as a second quantity range. Or the one or more quantity ranges may be, for example, 1~3 beams as a third quantity range, 4~32 beams as a fourth quantity range. It can be understood that when the quantity of beams included in the first set is different, it may correspond to different AI functionalities; or when the quantity of beams included in the first set falls within different quantity ranges, it may correspond to different AI functionalities, and if the quantity of beams included in the first set falls within the same quantity range, it may correspond to the same AI functionality. The beams include transmission beams of the network device and/or reception beams of the terminal device.
B. The positions of the beams included in the first set corresponding to the AI functionality within the beams included in the second set. This situation applies where the first set is a subset of the second set.
   Exemplarily, the second set includes 32 beams, for example, numbered 1, 2, 3, ..., 32. The first set includes beams from the second set with numbers: 1, 5, 9, 13, ..., 29. That is, the positions of the beams included in the first set within the beams included in the second set are the 1st, 5th, 9th, 13th, ..., 29th positions, respectively. Or the first set includes beams from the second set with numbers: 2, 6, 10, 14, ..., 30. That is, the positions of the beams included in the first set within the beams included in the second set are the 2nd, 6th, 10th, 14th, ..., 30th positions, respectively. It can be understood that when the positions of the beams included in the first set within the beams included in the second set are different, it may correspond to different AI functionalities; or when the positions of the beams included in the first set within the beams included in the second set are different, it may correspond to the same AI functionality. The beams include transmission beams of the network device and/or reception beams of the terminal device.
C. The quantity of beams included in the second set corresponding to the AI functionality, or the quantity range within which the quantity of beams included in the second set corresponding to the AI functionality falls.
   Exemplarily, the quantity of beams included in the second set may be, for example, 1 beam, 2 beams, 3 beams, etc., or 5 beams, 9 beams, etc., and the specific quantity is not limited. The quantity range within which the quantity of beams included in the second set corresponding to the AI functionality falls may be, for example, one or more quantity ranges. The one or more quantity ranges may be, for example, 1~8 beams as a first beam quantity range, 9~16 beams as a second beam quantity range. Or the one or more beam quantity ranges may be, for example, 1~3 beams as a third beam quantity range, 4~32 beams as a fourth beam quantity range. It can be understood that when the quantity of beams included in the second set is different, it may correspond to different AI functionalities; or when the quantity of beams included in the second set falls within different quantity ranges, it may correspond to different AI functionalities, and if the quantity of beams included in the second set falls within the same quantity range, it may correspond to the same AI functionality. The beams include transmission beams of the network device and/or reception beams of the terminal device.
D. The ratio of the quantity of beams corresponding to the first set to the quantity of beams corresponding to the second set. This situation applies where the first set is a subset of the second set, or where the first set is different from the second set.
   Exemplarily, the ratio of the quantity of beams corresponding to the first set to the quantity of beams corresponding to the second set includes the ratio of the quantity of beams in the first set to the quantity of beams in the second set. The quantity of beams in the first set may be the quantity of transmission beams of the network device and/or reception beams of the terminal device. The quantity of beams in the second set may be the quantity of transmission beams of the network device and/or reception beams of the terminal device. If the quantity of beams in the first set is 8 and the quantity of beams in the second set is 32, the ratio of the quantity of beams corresponding to the first set to the quantity of beams corresponding to the second set is 1/4. If the quantity of beams in the first set is 4 and the quantity of beams in the second set is 32, the ratio is 1/8.
   It can be understood that when the ratio of the quantity of beams corresponding to the first set to the quantity of beams corresponding to the second set is different, it may correspond to different AI functionalities. Or when the ratio is the same, it may correspond to the same AI functionality.
E. A mapping relationship between the beams included in the first set and the beams included in the second set. This situation applies where the first set is different from the second set.

Exemplarily, the first set may include wide beams. The second set includes narrow beams. The mapping relationship between the beams included in the first set and the beams included in the second set may be a mapping relationship between wide beams and narrow beams. For example, the first set is different from the second set, e.g., the first set includes wide beams numbered 1~8, and the second set includes narrow beams numbered 1~32. One mapping relationship is that the first wide beam corresponds to narrow beams numbered 1~4, and so on; or the first wide beam corresponds to narrow beams numbered 2~5, and so on.

It can be understood that different mapping relationships between the beams included in the first set and the beams included in the second set correspond to different AI functionalities. Or different mapping relationships correspond to the same AI functionality.

In an embodiment, different set relationships correspond to different AI functionalities.

In an embodiment, the first set is a subset of the second set. Different set relationships corresponding to different AI functionalities may include the following scenarios:
A. First sets with different quantities of beams correspond to different AI functionalities; or
B. First sets whose quantities of beams fall within different quantity ranges correspond to different AI functionalities; or
C. First sets with different quantities of beams correspond to the same AI functionality; or
D. First sets whose quantities of beams fall within different quantity ranges correspond to the same AI functionality; or
E. First sets whose beam compositions correspond to different beam positions in the second set correspond to different AI functionalities, where the first sets each has a respective beam composition; or
F. First sets whose beam compositions correspond to different beam positions in the second set correspond to the same AI functionality, wherein the first sets each has a respective beam composition;
G. Different ratios of the quantity of beams corresponding to the first set to the quantity of beams corresponding to the second set correspond to different AI functionalities; or
H. Different ratios of the quantity of beams corresponding to the first set to the quantity of beams corresponding to the second set correspond to the same AI functionality.

In an embodiment of this embodiment of the present disclosure, the first set is different from the second set. Different set relationships corresponding to different AI functionalities may include the following scenarios:
A. Different ratios of the quantity of beams corresponding to the first set to the quantity of beams corresponding to the second set correspond to different AI functionalities; or
B. Different ratios of the quantity of beams corresponding to the first set to the quantity of beams corresponding to the second set correspond to the same AI functionality.

In an embodiment, the time information of the first set and/or the second set corresponding to the AI functionality includes at least one of:
A. The quantity of time instances corresponding to the first set, or the quantity range within which the quantity of time instances corresponding to the first set falls.
B. The quantity of time instances corresponding to the second set, or the quantity range within which the quantity of time instances corresponding to the second set falls.
C. The time pattern of the time corresponding to the first set and the time corresponding to the second set.

The quantity of time instances involved in this embodiment of the present disclosure can be understood as the number of time instances. The quantity of time instances corresponding to the first set can be understood as history measurement time instances; the quantity of time instances corresponding to the second set can be understood as predicted future time instances.

In an embodiment, different quantities of time instances correspond to different AI functionalities. A different number of predicted future time instances corresponds to different AI functionalities. And/or a different number of measured historical measurement time instances corresponds to different AI functionalities.

In another implementation, different time patterns correspond to different AI functionalities. For example, within time-domain beam prediction, different repeat patterns of historical measurement time and predicted future time correspond to different functionalities.

In an embodiment of this embodiment of the present disclosure, the network device coverage parameter information includes at least one of:
A. The spacing between network devices (inter-site distance, ISD).
   In this embodiment of the present disclosure, the specific value setting of the spacing between network devices should be determined in combination with the deployment type selected by the corresponding network device. Taking urban macro cell as an example, the corresponding network device spacing can be arranged as 100m, 200m, 500m, 1000m, etc.
B. Deployment type.

The deployment type includes at least one of: Uma, Umi, indoor, dense urban, or rural.

In this embodiment of the present disclosure, different deployment types correspond to different AI functionalities, or different deployment types correspond to the same AI functionality.

In this embodiment of the present disclosure, different spacings between network devices correspond to different AI functionalities, or different spacings between network devices correspond to the same AI functionality.

In an embodiment of this embodiment of the present disclosure, the terminal distribution information includes the ratio of the quantity of outdoor terminals to the quantity of indoor terminals.

In an embodiment, different terminal distribution information corresponds to different AI functionalities, or different terminal distribution information corresponds to the same AI functionality.

In an embodiment of this embodiment of the present disclosure, the terminal mobility information includes at least one of:
A. Terminal movement speed.
B. Terminal movement acceleration.
C. Terminal movement direction and terminal movement trajectory.

In an embodiment, different terminal mobility information corresponds to different AI functionalities, or different terminal mobility information corresponds to the same AI functionality.

In an embodiment, the first set is a beam set corresponding to an input value of an AI model, and the second set is a beam set corresponding to an output of the model.

In an embodiment of the communication method provided by this embodiment of the present disclosure, the parameter information corresponding to the AI functionality is predefined by a protocol, or configured by configuration information sent by a network device, or indicated based on indication information sent by a network device or a terminal device.

In the communication method provided by this embodiment of the present disclosure, the first device may be a terminal, which sends indication information to an access network device or a core network device to inform the second device (the radio access network device or the core network device) of the functionality supported by the terminal. For example, the indication information may also include parameter information, which is used to indicate the AI functionality corresponding to the parameter information.

In the communication method provided by this embodiment of the present disclosure, the first device may be a radio access network device or a core network device. The first device sends indication information to the second device (the terminal) to inform the terminal of the parameter information of the AI functionality corresponding to the AI functionality.

In an embodiment, in response to the first device being a radio access network device or a core network device, or the parameter information corresponding to the AI functionality being predefined by a protocol, the indication information indicates at least two AI functionalities, and the at least two functionalities are different AI functionalities. In response to the first device being a terminal, the indication information indicates at least one AI functionality.

The parameter information corresponding to each AI functionality in this embodiment of the present disclosure may be specified by the protocol, configured by configuration information sent by the network device, or indicated based on indication information sent by the network device or the terminal.

This embodiment of the present disclosure includes two types of parameter information: first-type parameter information and second-type parameter information. Where the first-type parameter information is different, it must correspond to different AI functionalities. Where the second-type parameter information is different, it may correspond to the same AI functionality or to different AI functionalities. For the first-type parameter information, it must be consistent between the first device and the second device. It can also be understood that when the protocol defines an AI functionality, it needs to clearly specify the first-type parameter information corresponding to that AI functionality; or the first device and the second device need to transmit the first-type parameter information corresponding to each AI functionality. For example, if the set relationship between the first set and the second set is different, different set relationships must correspond to different AI functionalities. Therefore, both the first device and the second device can determine that the first AI functionality corresponds to the first set relationship, and the second AI functionality corresponds to the second set relationship.

The second-type parameter information is optionally transmitted between the first device and the second device. That is, the first device may indicate the parameter information corresponding to the same AI functionality to the second device, or may not indicate it.

In an embodiment, the AI functionality can be understood as a capability of the terminal. In this embodiment of the present disclosure, the AI functionality is a capability that the terminal must support, or the AI functionality is a capability that the terminal optionally supports.

In an embodiment, the AI functionality includes a first AI functionality and a second AI functionality. The first AI functionality is a prerequisite requirement for the second functionality. In one example, the first AI functionality corresponds to the terminal supporting spatial beam prediction, and the second AI functionality corresponds to the terminal supporting spatial beam prediction where the first set is a subset of the second set. That is, the terminal supporting spatial beam prediction is a prerequisite requirement for supporting spatial beam prediction where the first set is a subset of the second set.

It can be understood that the technical implementation involved in the process of network device communication in this embodiment of the present disclosure can be applied to the process of terminal communication in this embodiment of the present disclosure. Therefore, for some technical implementation descriptions that are not detailed enough in the process of network device communication, reference may be made to the relevant descriptions in the implementation process of terminal communication, and details are not repeated here.

It can be understood that the communication method provided by the embodiments of the present disclosure is applicable to the process of communication between a terminal and a network device through interaction. The process of interaction between the terminal and the network device to achieve communication is not detailed in this embodiment of the present disclosure.

It should be noted that those skilled in the art can understand that the various implementations/embodiments mentioned above in the present disclosure can be used in conjunction with the foregoing embodiments or can be used independently. Whether used together or in conjunction with the foregoing embodiments, the implementation principles are similar. In the implementations of the present disclosure, some embodiments are described in the manner of being used together. Of course, those skilled in the art can understand that such examples are not limitations on the embodiments of the present disclosure.

Based on the same concept, the embodiments of the present disclosure also provide a communication apparatus.

It can be understood that, in order to achieve the above functions, the communication apparatus provided by the embodiments of the present disclosure includes hardware structures and/or software modules corresponding to each function. In combination with the units and algorithm steps of the examples disclosed in the embodiments of the present disclosure, the embodiments of the present disclosure can be implemented in the form of hardware or a combination of hardware and computer software. Whether a function is performed by hardware or hardware driven by computer software depends on the specific application and design constraints of the technical solution. Those skilled in the art can use different methods for each specific application to implement the described functions, but such implementation should not be considered beyond the scope of the technical solutions of the embodiments of the present disclosure.

FIG. 5 is a block diagram of a communication apparatus according to an embodiment. Referring to FIG. 5, the communication apparatus may be the first device involved in the above embodiments or a component in the first device. Referring to FIG. 5, the communication apparatus includes a sending unit 101.

The sending unit 101 is configured to send indication information, where the indication information is used to indicate an artificial intelligence (AI) functionality, and the AI functionality is used for beam prediction.

In an embodiment, the indication information includes the AI functionality.

In an embodiment, different AI functionalities correspond to different parameter information.

In an embodiment, the indication information includes parameter information.

In an embodiment, the parameter information includes at least one of:
an application instance corresponding to the AI functionality;
a set relationship between a first set and a second set corresponding to the AI functionality, where the first set and the second set include a transmission beam of a network device and/or a reception beam of a terminal device;
beam information of a first set and/or a second set corresponding to the AI functionality, where the first set and the second set include a transmission beam of a network device and/or a reception beam of a terminal device;
time information of a first set and/or a second set corresponding to the AI functionality, where the first set and the second set include a transmission beam of a network device and/or a reception beam of a terminal device, and the AI functionality is used for time-domain beam prediction;
network device coverage parameter information;
terminal distribution information; or
terminal mobility information.

In an embodiment, the set relationship includes at least one of:
the first set being a subset of the second set;
the first set being different from the second set; or
the first set being identical to the second set.

In an embodiment, the beam information includes at least one of:
a quantity of beams included in the first set corresponding to the AI functionality, or a quantity range within which a quantity of beams included in the first set corresponding to the AI functionality falls;
positions of beams included in the first set corresponding to the AI functionality within beams included in the second set, where the first set is a subset of the second set;
a quantity of beams included in the second set corresponding to the AI functionality, or a quantity range within which a quantity of beams included in the second set corresponding to the AI functionality falls;
a ratio of a quantity of beams corresponding to the first set to a quantity of beams corresponding to the second set; or
a mapping relationship between beams included in the first set and beams included in the second set, where the first set is different from the second set.

In an embodiment, the time information includes at least one of:
a quantity of time instances corresponding to the first set, or a quantity range within which a quantity of time instances corresponding to the first set falls;
a quantity of time instances corresponding to the second set, or a quantity range within which a quantity of time instances corresponding to the second set falls; or
a time pattern of time corresponding to the first set and time corresponding to the second set.

In an embodiment, the network device coverage parameter information includes at least one of:
a spacing between network devices; or
a deployment type, where the deployment type includes at least one of: urban macro, urban micro, indoor hotspot, dense urban, or rural.

In an embodiment, the terminal distribution information includes a ratio of a quantity of outdoor terminals to a quantity of indoor terminals.

In an embodiment, the terminal mobility information includes at least one of:
a terminal movement speed;
a terminal movement acceleration;
a terminal movement direction; or
a terminal movement trajectory.

In an embodiment, different set relationships correspond to different AI functionalities.

In an embodiment, where the first set is a subset of the second set, the correspondence between the parameter information and the AI functionality includes at least one of:
first sets with different quantities of beams correspond to different AI functionalities; or
first sets whose quantities of beams fall within different quantity ranges correspond to different AI functionalities; or
first sets with different quantities of beams correspond to the same AI functionality; or
first sets whose quantities of beams fall within different quantity ranges correspond to the same AI functionality; or
first sets, where beam compositions thereof correspond to different beam positions in the second set, correspond to different AI functionalities, where each of the first sets has a respective beam composition; or
first sets, where beam compositions thereof correspond to different beam positions in the second set, correspond to the same AI functionality, where each of the first sets has a respective beam composition; or
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, where the first set is different from the second set, the correspondence between the parameter information and the AI functionality includes at least one of:
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, different quantities of time instances correspond to different AI functionalities.

In an embodiment, different time patterns correspond to different AI functionalities.

In an embodiment,
different deployment types correspond to different AI functionalities, or different deployment types correspond to the same AI functionality;
different spacings between network devices correspond to different AI functionalities, or different spacings between network devices correspond to the same AI functionality.

In an embodiment, different terminal distribution information corresponds to different AI functionalities, or different terminal distribution information corresponds to the same AI functionality.

In an embodiment, different terminal mobility information corresponds to different AI functionalities, or different terminal mobility information corresponds to the same AI functionality.

In an embodiment, the first set is a beam set corresponding to an input value of an AI model, and the second set is a beam set corresponding to an output of the model.

In an embodiment, the first device is a terminal.

In an embodiment, the first device is a radio access network device or a core network device.

In an embodiment, the parameter information corresponding to the AI functionality is predefined by a protocol, or configured by configuration information, or indicated based on indication information.

In an embodiment, in response to the first device being a radio access network device or a core network device, or the parameter information corresponding to the AI functionality being predefined by a protocol, the indication information indicates at least two AI functionalities, and the at least two functionalities are different AI functionalities;
in response to the first device being a terminal, the indication information indicates at least one AI functionality.

In an embodiment, the AI functionality is a capability that the terminal must support, or the AI functionality is a capability that the terminal optionally supports.

In an embodiment, the AI functionality includes a first AI functionality and a second AI functionality;
the first AI functionality is a prerequisite requirement for the second functionality.

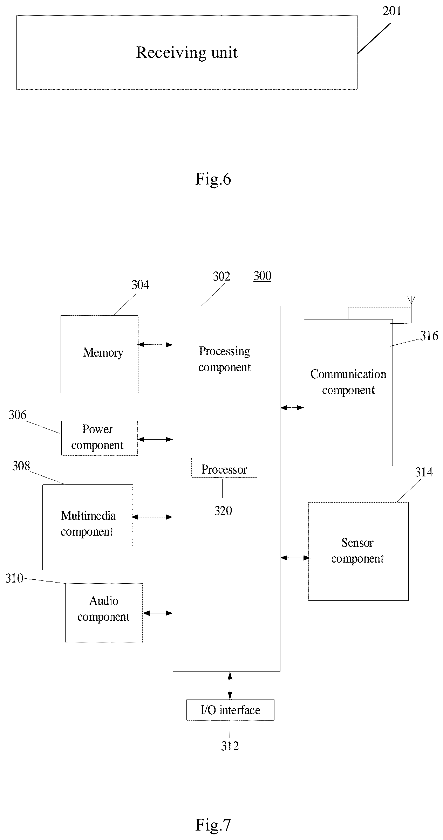

FIG. 6 is a block diagram of a communication apparatus according to an embodiment. Referring to FIG. 6, the communication apparatus may be the second device involved in the above embodiments or a component in the second device. Referring to FIG. 6, the communication apparatus includes a receiving unit 201.

The receiving unit 201 is configured to receive indication information, where the indication information is used to indicate an artificial intelligence (AI) functionality, and the AI functionality is used for beam prediction.

In an embodiment, the indication information includes the AI functionality.

In an embodiment, different AI functionalities correspond to different parameter information.

In an embodiment, the indication information includes parameter information.

In an embodiment, the parameter information includes at least one of:
an application instance corresponding to the AI functionality;
a set relationship between a first set and a second set corresponding to the AI functionality, where the first set and the second set include a transmission beam of a network device and/or a reception beam of a terminal device;
beam information of a first set and/or a second set corresponding to the AI functionality, where the first set and the second set include a transmission beam of a network device and/or a reception beam of a terminal device;
time information of a first set and/or a second set corresponding to the AI functionality, where the first set and the second set include a transmission beam of a network device and/or a reception beam of a terminal device, and the AI functionality is used for time-domain beam prediction;
network device coverage parameter information;
terminal distribution information; or
terminal mobility information.
In an embodiment, the set relationship includes at least one of:
the first set being a subset of the second set;
the first set being different from the second set; or
the first set being identical to the second set.

In an embodiment, the beam information includes at least one of:
a quantity of beams included in the first set corresponding to the AI functionality, or a quantity range within which a quantity of beams included in the first set corresponding to the AI functionality falls;
positions of beams included in the first set corresponding to the AI functionality within beams included in the second set, where the first set is a subset of the second set;
a quantity of beams included in the second set corresponding to the AI functionality, or a quantity range within which a quantity of beams included in the second set corresponding to the AI functionality falls;
a ratio of a quantity of beams corresponding to the first set to a quantity of beams corresponding to the second set; or
a mapping relationship between beams included in the first set and beams included in the second set, where the first set is different from the second set.

In an embodiment, the time information includes at least one of:
a quantity of time instances corresponding to the first set, or a quantity range within which a quantity of time instances corresponding to the first set falls;
a quantity of time instances corresponding to the second set, or a quantity range within which a quantity of time instances corresponding to the second set falls; or
a time pattern of time corresponding to the first set and time corresponding to the second set.

In an embodiment, the network device coverage parameter information includes at least one of:
a spacing between network devices; or
a deployment type, where the deployment type includes at least one of: urban macro, urban micro, indoor hotspot, dense urban, or rural.

In an embodiment, the terminal distribution information includes a ratio of a quantity of outdoor terminals to a quantity of indoor terminals.

In an embodiment, the terminal mobility information includes at least one of:
a terminal movement speed;
a terminal movement acceleration;
a terminal movement direction; or
a terminal movement trajectory.

In an embodiment, different set relationships correspond to different AI functionalities.

In an embodiment, where the first set is a subset of the second set, the correspondence between the parameter information and the AI functionality includes at least one of:
first sets with different quantities of beams correspond to different AI functionalities; or
first sets whose quantities of beams fall within different quantity ranges correspond to different AI functionalities; or
first sets with different quantities of beams correspond to the same AI functionality; or
first sets whose quantities of beams fall within different quantity ranges correspond to the same AI functionality; or
first sets, where beam compositions thereof correspond to different beam positions in the second set, correspond to different AI functionalities, where each of the first sets has a respective beam composition; or
first sets, where beam compositions thereof correspond to different beam positions in the second set, correspond to the same AI functionality, where each of the first sets has a respective beam composition; or
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, the first set is different from the second set, the correspondence between the parameter information and the AI functionality includes at least one of:
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

In an embodiment, different quantities of time instances correspond to different AI functionalities.

In an embodiment, different time patterns correspond to different AI functionalities.

In an embodiment, different deployment types correspond to different AI functionalities, or different deployment types correspond to the same AI functionality;
different spacings between network devices correspond to different AI functionalities, or different spacings between network devices correspond to the same AI functionality.

In an embodiment, different terminal distribution information corresponds to different AI functionalities, or different terminal distribution information corresponds to the same AI functionality.

In an embodiment, different terminal mobility information corresponds to different AI functionalities, or different terminal mobility information corresponds to the same AI functionality.

In an embodiment, the first set is a beam set corresponding to an input value of an AI model, and the second set is a beam set corresponding to an output of the model.

In an embodiment, the first device is a terminal.

In an embodiment, the first device is a radio access network device or a core network device.

In an embodiment, the parameter information corresponding to the AI functionality is predefined by a protocol, or configured by configuration information, or indicated based on indication information.

In an embodiment, in response to the first device being a radio access network device or a core network device, or the parameter information corresponding to the AI functionality being predefined by a protocol, the indication information indicates at least two AI functionalities, and the at least two functionalities are different AI functionalities;
in response to the first device being a terminal, the indication information indicates at least one AI functionality.

In an embodiment, the AI functionality is a capability that the terminal must support, or the AI functionality is a capability that the terminal optionally supports.

In an embodiment, the AI functionality includes a first AI functionality and a second AI functionality;
the first AI functionality is a prerequisite requirement for the second functionality.

Regarding the apparatus in the above embodiments, the specific manner in which each module performs operations has been described in detail in the embodiments related to the method, and will not be explained in detail here.

FIG. 7 is a block diagram of an apparatus 300 for communication according to an embodiment. For example, the apparatus 300 may be a mobile phone, a computer, a digital broadcast terminal, a messaging device, a gaming console, a tablet device, a medical device, a fitness device, a personal digital assistant, etc.

Referring to FIG. 7, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, telephone calls, data communications, camera operations, and recording operations. The processing component 302 may include one or more processors 320 to execute instructions to perform all or part of the steps of the above method. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the apparatus 300. Examples of such data include instructions for any application or method operated on the apparatus 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the apparatus 300. The power component 306 may include a power management system, one or more power sources, and any other components associated with the generation, management, and distribution of power in the apparatus 300.

The multimedia component 308 includes a screen providing an output interface between the apparatus 300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe operation. In some embodiments, the multimedia component 308 includes a front camera and/or a rear camera. The front camera and the rear camera may receive external multimedia data while the apparatus 300 is in an operation mode, such as a photographing mode or a video mode. Each of the front camera and the rear camera may be a fixed optical lens system or have focal length and optical zoom capability.

The audio component 310 is configured to output and/or input audio signals. For example, the audio component 310 includes a microphone (MIC) configured to receive an external audio signal when the apparatus 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a start button, and a lock button.

The sensor component 314 includes one or more sensors to provide status assessments of various aspects of the apparatus 300. For instance, the sensor component 314 may detect an open/closed status of the apparatus 300, relative positioning of components, e.g., the display and the keypad, of the apparatus 300, a change in position of the apparatus 300 or a component of the apparatus 300, a presence or absence of user contact with the apparatus 300, an orientation or an acceleration/deceleration of the apparatus 300, and a change in temperature of the apparatus 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the apparatus 300 and other devices. The apparatus 300 can access a wireless network based on a communication standard, such as WiFi, 2G, or 3G, or a combination thereof. In an exemplary embodiment, the communication component 316 receives a broadcast signal or broadcast associated information from an external broadcast management system via a broadcast channel. In an exemplary embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment, the apparatus 300 may be implemented with one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the above method.

In an embodiment, there is also provided a non-transitory computer-readable storage medium including instructions, such as included in the memory 304, executable by the processor 320 of the apparatus 300 for performing the above method. For example, the non-transitory computer-readable storage medium may be a ROM, a random access memory (RAM), a CD-ROM, a magnetic tape, a floppy disc, an optical data storage device, and the like.

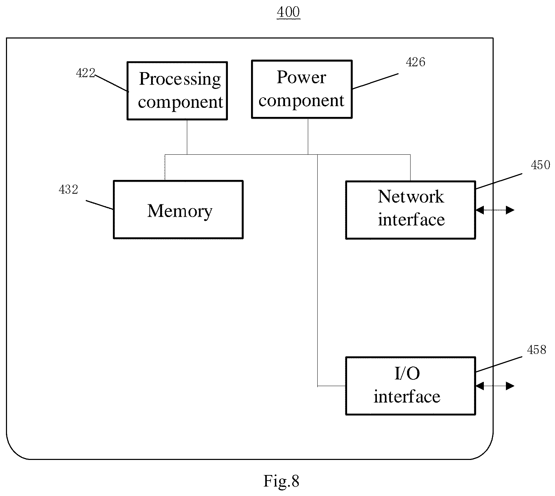

FIG. 8 is a block diagram of an apparatus 400 for communication according to an embodiment. For example, the apparatus 400 may be provided as a core network device or an access network device. Referring to FIG. 8, the apparatus 400 includes a processing component 422, which further includes one or more processors, and memory resources represented by a memory 432 for storing instructions executable by the processing component 422, such as application programs. The application programs stored in the memory 432 may include one or more modules each corresponding to a set of instructions. Furthermore, the processing component 422 is configured to execute the instructions to perform the above method.

The apparatus 400 may also include a power component 426 configured to perform power management of the apparatus 400, a wired or wireless network interface 450 configured to connect the apparatus 400 to a network, and an input output (I/O) interface 458. The apparatus 400 may operate an operating system stored in the memory 432, such as Windows Server^{™}, Mac OS X^{™}, Unix^{™}, Linux^{™}, FreeBSD^{™} or the like.

In an embodiment, there is also provided a non-transitory computer-readable storage medium including instructions, such as included in the memory 432, executable by the processing component 422 of the apparatus 400 for performing the above method. For example, the non-transitory computer-readable storage medium may be a ROM, a random access memory (RAM), a CD-ROM, a magnetic tape, a floppy disc, an optical data storage device, and the like.

Furthermore, it can be understood that "a plurality of' in the present disclosure means two or more, and other quantifiers are similar. "and/or" describes the association relationship of associated objects, indicating that three relationships may exist. For example, A and/or B may indicate: A exists alone, both A and B exist, and B exists alone. The character "/" generally indicates that the associated objects are in an "or" relationship. The singular forms "a", "the", and "said" are also intended to include the plural forms unless the context clearly indicates otherwise.

Furthermore, it can be understood that the meanings of the terms "in response to" and "if' involved in the present disclosure depend on the context and the actual usage scenario. The term "in response to" as used herein may be interpreted as "at the time of' or "when" or "if".

Furthermore, it can be understood that the terms "first", "second", etc. are used to describe various information, but this information should not be limited by these terms. These terms are only used to distinguish information of the same type from each other and do not indicate a particular order or importance. In fact, the expressions "first", "second", etc. are completely interchangeable. For example, without departing from the scope of the present disclosure, first information may also be referred to as second information, and similarly, second information may also be referred to as first information.

Furthermore, it can be understood that although the operations are described in a specific order in the drawings in the embodiments of the present disclosure, this should not be understood as requiring that these operations be performed in the specific order shown or in serial order, or that all shown operations be performed to obtain desired results. In specific environments, multitasking and parallel processing may be advantageous.

Other embodiments of the present disclosure will be readily apparent to those skilled in the art upon consideration of the specification and practice of the invention disclosed herein. This application is intended to cover any variations, uses, or adaptations of the present disclosure following the general principles thereof and including common general knowledge or customary technical means in the art not disclosed herein.

It should be understood that the present disclosure is not limited to the precise structure that has been described above and shown in the drawings, and that various modifications and changes may be made without departing from the scope thereof. The scope of the present disclosure is limited only by the appended claims.

## Claims

1. A communication method, performed by a first device, comprising:
sending indication information, wherein the indication information indicates an artificial intelligence (AI) functionality, and the AI functionality is used for a beam prediction.

2. The method according to claim 1, wherein the indication information comprises the AI functionality.

3. The method according to claim 1, wherein the AI functionality comprises a plurality of AI functionalities, and different AI functionalities correspond to different parameter information.

4. The method according to claim 1, wherein the indication information comprises parameter information.

5. The method according to claim 3 or 4, wherein the parameter information corresponding to a respective AI functionality comprises at least one of:
an application instance corresponding to the AI functionality;
a set relationship between a first set and a second set corresponding to the AI functionality, wherein the first set and the second set comprise a transmission beam of a network device and/or a reception beam of a terminal;
beam information of a first set and/or a second set corresponding to the AI functionality, wherein the first set and the second set comprise a transmission beam of a network device and/or a reception beam of a terminal;
time information of a first set and/or a second set corresponding to the AI functionality, wherein the first set and the second set comprise a transmission beam of a network device and/or a reception beam of a terminal, and the AI functionality is used for a time-domain beam prediction;
network device coverage parameter information;
terminal distribution information; or
terminal mobility information.

6. The method according to claim 5, wherein the application instance corresponding to the AI functionality comprises at least one of:
a spatial beam prediction;
a time-domain beam prediction; or
a spatial beam prediction and a time-domain beam prediction.

7. The method according to claim 5, wherein the set relationship comprises at least one of:
the first set being a subset of the second set;
the first set being different from the second set; or
the first set being identical to the second set.

8. The method according to claim 5, wherein the beam information comprises at least one of:
a quantity of beams comprised in the first set corresponding to the AI functionality, or a quantity range within which a quantity of beams comprised in the first set corresponding to the AI functionality falls;
positions of beams comprised in the first set corresponding to the AI functionality in beams comprised in the second set, wherein the first set is a subset of the second set;
a quantity of beams comprised in the second set corresponding to the AI functionality, or a quantity range within which a quantity of beams comprised in the second set corresponding to the AI functionality falls;
a ratio of a quantity of beams corresponding to the first set to a quantity of beams corresponding to the second set; or
a mapping relationship between beams comprised in the first set and beams comprised in the second set, wherein the first set is different from the second set.

9. The method according to claim 5, wherein the time information comprises at least one of:
a quantity of time instances corresponding to the first set, or a quantity range within which a quantity of time instances corresponding to the first set falls;
a quantity of time instances corresponding to the second set, or a quantity range within which a quantity of time instances corresponding to the second set falls; or
a time pattern of time corresponding to the first set and time corresponding to the second set.

10. The method according to claim 5, wherein the network device coverage parameter information comprises at least one of:
a spacing between network devices; or
a deployment type, wherein the deployment type comprises at least one of: urban macro, urban micro, indoor, dense urban or rural.

11. The method according to claim 5, wherein the terminal distribution information comprises a ratio of a quantity of outdoor terminals to a quantity of indoor terminals.

12. The method according to claim 5, wherein the terminal mobility information comprises at least one of:
a terminal movement speed;
a terminal movement acceleration;
a terminal movement direction; or
a terminal movement trajectory.

13. The method according to claim 5 or 7, wherein the set relationship comprises a plurality of set relationships, and different set relationships correspond to different AI functionalities.

14. The method according to claim 5, 7, or 8, wherein the first set is a subset of the second set, and a correspondence between the parameter information and the AI functionality comprises at least one of:
first sets with different quantities of beams correspond to different AI functionalities;
first sets whose quantities of beams fall within different quantity ranges correspond to different AI functionalities;
first sets with different quantities of beams correspond to the same AI functionality;
first sets whose quantities of beams fall within different quantity ranges correspond to the same AI functionality;
first sets whose beam compositions correspond to different beam positions in the second set correspond to different AI functionalities, wherein the first sets each has a respective beam composition;
first sets whose beam compositions correspond to different beam positions in the second set correspond to the same AI functionality, wherein the first sets each has a respective beam composition;
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

15. The method according to claim 5, 7, or 8, wherein the first set is different from the second set, and a correspondence between the parameter information and the AI functionality comprises at least one of:
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

16. The method according to claim 5 or 9, wherein different quantity of time instances correspond to different AI functionalities.

17. The method according to claim 5 or 9, wherein different time patterns correspond to different AI functionalities.

18. The method according to claim 5 or 10, wherein
different deployment types correspond to different AI functionalities, or different deployment types correspond to the same AI functionality;
different spacings between network devices correspond to different AI functionalities, or different spacings between network devices correspond to the same AI functionality.

19. The method according to claim 5 or 11, wherein different terminal distribution information corresponds to different AI functionalities, or different terminal distribution information corresponds to the same AI functionality.

20. The method according to claim 5 or 12, wherein different terminal mobility information corresponds to different AI functionalities, or different terminal mobility information corresponds to the same AI functionality.

21. The method according to any one of claims 5 to 9, wherein the first set is a beam set corresponding to an input of an AI model, and the second set is a beam set corresponding to an output of the AI model.

22. The method according to claim 1, wherein the first device is a terminal.

23. The method according to claim 1, wherein the first device is a radio access network device or a core network device.

24. The method according to claim 1, wherein the parameter information corresponding to the AI functionality is predefined by a protocol, or configured by configuration information, or indicated based on indication information.

25. The method according to claim 1, wherein in response to the first device being a radio access network device or a core network device, or the parameter information corresponding to the AI functionality being predefined by a protocol, the indication information indicates at least two AI functionalities, and the at least two functionalities are different AI functionalities;
in response to the first device being a terminal, the indication information indicates at least one AI functionality.

26. The method according to claim 1, wherein the AI functionality is a capability necessarily supported by a terminal, or the AI functionality is a capability optionally supported by a terminal.

27. The method according to claim 1, wherein the AI functionality comprises a first AI functionality and a second AI functionality;
the first AI functionality is a prerequisite requirement of the second functionality.

28. A communication method, performed by a second device, comprising:
receiving indication information sent by a first device, wherein the indication information indicates an artificial intelligence (AI) functionality, and the AI functionality is used for a beam prediction.

29. The method according to claim 28, wherein the indication information comprises the AI functionality.

30. The method according to claim 28, wherein the AI functionality comprises a plurality of AI functionalities, and different AI functionalities correspond to different parameter information.

31. The method according to claim 28, wherein the indication information comprises parameter information.

32. The method according to claim 30 or 31, wherein the parameter information corresponding to a respective AI functionality comprises at least one of:
an application instance corresponding to the AI functionality;
a set relationship between a first set and a second set corresponding to the AI functionality, wherein the first set and the second set comprise a transmission beam of a network device and/or a reception beam of a terminal;
beam information of a first set and/or a second set corresponding to the AI functionality, wherein the first set and the second set comprise a transmission beam of a network device and/or a reception beam of a terminal;
time information of a first set and/or a second set corresponding to the AI functionality, wherein the first set and the second set comprise a transmission beam of a network device and/or a reception beam of a terminal, and the AI functionality is used for a time-domain beam prediction;
network device coverage parameter information;
terminal distribution information; or
terminal mobility information.

33. The method according to claim 32, wherein the application instance corresponding to the AI functionality comprises at least one of:
a spatial beam prediction;
a time-domain beam prediction; or
a spatial beam prediction and a time-domain beam prediction.

34. The method according to claim 32, wherein the set relationship comprises at least one of:
the first set being a subset of the second set;
the first set being different from the second set; or
the first set being identical to the second set.

35. The method according to claim 32, wherein the beam information comprises at least one of:
a quantity of beams comprised in the first set corresponding to the AI functionality, or a quantity range within which a quantity of beams comprised in the first set corresponding to the AI functionality falls;
positions of beams comprised in the first set corresponding to the AI functionality in beams comprised in the second set, wherein the first set is a subset of the second set;
a quantity of beams comprised in the second set corresponding to the AI functionality, or a quantity range within which a quantity of beams comprised in the second set corresponding to the AI functionality falls;
a ratio of a quantity of beams corresponding to the first set to a quantity of beams corresponding to the second set; or
a mapping relationship between beams comprised in the first set and beams comprised in the second set, wherein the first set is different from the second set.

36. The method according to claim 32, wherein the time information comprises at least one of:
a quantity of time instances corresponding to the first set, or a quantity range within which a quantity of time instances corresponding to the first set falls;
a quantity of time instances corresponding to the second set, or a quantity range within which a quantity of time instances corresponding to the second set falls; or
a time pattern of time corresponding to the first set and time corresponding to the second set.

37. The method according to claim 32, wherein the network device coverage parameter information comprises at least one of:
a spacing between network devices; or
a deployment type, wherein the deployment type comprises at least one of: urban macro, urban micro, indoor, dense urban or rural.

38. The method according to claim 32, wherein the terminal distribution information comprises a ratio of a quantity of outdoor terminals to a quantity of indoor terminals.

39. The method according to claim 32, wherein the terminal mobility information comprises at least one of:
a terminal movement speed;
a terminal movement acceleration;
a terminal movement direction; or
a terminal movement trajectory.

40. The method according to claim 32 or 34, wherein the set relationship comprises a plurality of set relationships, and different set relationships correspond to different AI functionalities.

41. The method according to claim 32, 34, or 35, wherein the first set is a subset of the second set, and a correspondence between the parameter information and the AI functionality comprises at least one of:
first sets with different quantities of beams correspond to different AI functionalities;
first sets whose quantities of beams fall within different quantity ranges correspond to different AI functionalities;
first sets with different quantities of beams correspond to the same AI functionality;
first sets whose quantities of beams fall within different quantity ranges correspond to the same AI functionality;
first sets whose beam compositions correspond to different beam positions in the second set correspond to different AI functionalities, wherein the first sets each has a respective beam composition;
first sets whose beam compositions correspond to different beam positions in the second set correspond to the same AI functionality, wherein the first sets each has a respective beam composition;
different ratios of the quantity of beams corresponding to the first set to the quantity of beams corresponding to the second set correspond to different AI functionalities; or
different ratios of the quantity of beams corresponding to the first set to the quantity of beams corresponding to the second set correspond to the same AI functionality.

42. The method according to claim 32, 34, or 35, wherein the first set is different from the second set, and a correspondence between the parameter information and the AI functionality comprises at least one of:
different ratios of a quantity of beams corresponding to the first set to a quantity of beams corresponding to the second set correspond to different AI functionalities; or
different ratios of a quantity of beams corresponding to the first set to a quantity of beams corresponding to the second set correspond to the same AI functionality.

43. The method according to claim 32 or 36, wherein different quantity of time instances correspond to different AI functionalities.

44. The method according to claim 32 or 36, wherein different time patterns correspond to different AI functionalities.

45. The method according to claim 32 or 37, wherein
different deployment types correspond to different AI functionalities, or different deployment types correspond to the same AI functionality;
different spacings between network devices correspond to different AI functionalities, or different spacings between network devices correspond to the same AI functionality.

46. The method according to claim 32 or 38, wherein different terminal distribution information corresponds to different AI functionalities, or different terminal distribution information corresponds to the same AI functionality.

47. The method according to claim 32 or 39, wherein different terminal mobility information corresponds to different AI functionalities, or different terminal mobility information corresponds to the same AI functionality.

48. The method according to any one of claims 32 to 36, wherein the first set is a beam set corresponding to an input of an AI model, and the second set is a beam set corresponding to an output of the AI model.

49. The method according to claim 28, wherein the first device is a terminal.

50. The method according to claim 28, wherein the first device is a radio access network device or a core network device.

51. The method according to claim 28, wherein the parameter information corresponding to the AI functionality is predefined by a protocol, or configured by configuration information, or indicated based on indication information.

52. The method according to claim 28, wherein in response to the first device being a radio access network device or a core network device, or the parameter information corresponding to the AI functionality being predefined by a protocol, the indication information indicates at least two AI functionalities, and the at least two functionalities are different AI functionalities;
in response to the first device being a terminal, the indication information indicates at least one AI functionality.

53. The method according to claim 28, wherein the AI functionality is a capability necessarily supported by a terminal, or the AI functionality is a capability optionally supported by a terminal.

54. The method according to claim 28, wherein the AI functionality comprises a first AI functionality and a second AI functionality;
the first AI functionality is a prerequisite requirement of the second functionality.

55. A communication apparatus, comprising:
a sending unit configured to send indication information, wherein the indication information indicates an artificial intelligence (AI) functionality, and the AI functionality is used for a beam prediction.

56. A communication apparatus, comprising:
a receiving unit configured to receive indication information sent by a first device, wherein the indication information indicates an artificial intelligence (AI) functionality, and the AI functionality is used for a beam prediction.

57. A communication apparatus, comprising:
a processor; and
a memory for storing processor-executable instructions;
wherein the processor is configured to perform the method according to any one of claims 1 to 27, or perform the method according to any one of claims 28 to 54.

58. A storage medium having stored therein instructions that, when executed by a processor of a first device, cause the first device to perform the method according to any one of claims 1 to 27, or when executed by a processor of a second device, cause the second device to perform the method according to any one of claims 28 to 54.
